# DEMANDE DE BREVET EUROPEEN

(11) **EP 1 017 248 A1**
(43) Date de publication de la demande: **05.07.2000**
(21) Numéro de dépôt: 99403285.2
(22) Date de dépôt: 27.12.1999
(51) Int. Cl.: H04Q 11/04, H04L 12/56

(54) **Procédé de reséquencement de blocs de données, dans un système de commutation asynchrone**

(30) Priorité: 31.12.1998 FR 9816708
(71) Demandeur: ALCATEL, 75008 Paris (FR)
(72) Inventeur: Henrion, Michel, 1180 Bruxelles (BE)
(74) Mandataire: Sciaux, Edmond

(57) **Abrégé**

L'invention concerne un procédé de reséquencement de blocs de données, dans un système de commutation asynchrone de blocs de données, la position d'origine d'un bloc de données dans la séquence source étant appelée position séquentielle, ledit système étant susceptible de ne pas respecter l'ordre séquentiel original des blocs de données lors de leur transfert vers un port de sortie, comme dans le cas d'un système de commutation multi-trajet, et comprenant des modules terminaux entrants et sortants interconnectés par au moins un étage de commutation comprenant au moins deux éléments de commutation. Sur chacun des liens internes interconnectant les éléments de commutation entre eux, et sur chacun des liens internes interconnectant les éléments de commutation et les modules terminaux, chacun desdits blocs de données comporte une information de reséquencement (RPI; FRB), permettant de déterminer un seuil temporel de reséquencement tel que la position séquentielle de tous les blocs de données qui seront transférés ultérieurement sur ledit lien n'est pas antérieure audit seuil temporel de reséquencement et tous les blocs de données transmis sur ledit lien jusqu'audit bloc de données et dont la position séquentielle respective est inférieure ou égale à la valeur dudit seuil temporel de reséquencement, peuvent être remis en séquence.

## Description

Le domaine de l'invention est celui de la commutation asynchrone de blocs de données, dans des systèmes susceptibles de ne pas respecter l'ordre séquentiel original des blocs de données lors de leur transfert vers un port de sortie destinataire. C'est le cas, par exemple, d'un système de commutation multi-trajet dans lesquels les blocs de données sont transférés vers leur port de sortie destinataire par l'intermédiaire d'une pluralité de chemins possibles. L'invention concerne la commutation asynchrone de tout type de bloc de données, tels que paquets ou cellules, qu'ils soient de longueur fixe ou variable (dans la suite de la description, on utilise indifféremment les termes "blocs de données" et "cellules").

Plus précisément, l'invention concerne la remise en séquence, ou reséquencement, des blocs de données transférés à travers un tel système de commutation. On sait en effet que dans les systèmes offrant une pluralité de chemins possibles pour transférer dynamiquement chaque bloc de données, tels que les commutateurs multi-trajets, par exemple des commutateurs à auto-acheminement à chemins multiples (en langue anglaise "multipath self-routing switch"), chaque chemin peut introduire un délai de transfert variable, et qu'en conséquence l'ordre des blocs de données reçu au niveau du port de sortie peut ne pas correspondre à la séquence d'origine au niveau du port d'entrée. Il est alors nécessaire de d'effectuer un reséquencement restituant cet séquence d'origine des blocs de données.

Une technique de reséquencement est décrite dans la demande de brevet EP 0 438 415. Selon cette technique, on met en oeuvre des moyens d'égalisation des délais de transfert à la sortie d'un équipement (en particulier un réseau de commutation). Ces moyens d'égalisation ont pour objet d'ajouter au délai de transfert variable de chaque bloc de données un délai d'attente complémentaire dans une mémoire de reséquencement, de façon que la somme du délai de transfert variable et du délai d'attente soit toujours égale à un délai de transfert total fixe prédéterminé. Ainsi, le transfert de chaque bloc de données étant affecté d'un même délai fixe, chaque bloc de données se retrouve avec la même position séquentielle d'origine.Il est donc remis en séquence.

Quand le bloc de données a subi son délai d'attente complémentaire dans la mémoire de reséquencement, il peut donc être transmis à la mémoire tampon de sortie.

Pour obtenir ce résultat, le terminal de sortie doit bien sûr connaître le délai de transfert variable subi par chaque bloc de données, afin de déterminer le délai complémentaire que doit appliquer la mémoire de reséquencement. Deux méthodes ont été proposées pour déterminer ce délai d'attente :
- l'utilisation d'un indicateur (compteur) de délai dans chaque bloc de données, dans lequel sont additionnés tous les délais partiels subis dans chaque élément de commutation ;
- l'utilisation d'un indicateur de temps, basé sur une information temporelle caractérisant la position séquentielle de ce bloc, cette information temporelle étant caractérisée par la position de temps d'horloge à laquelle le bloc de données est transmis par le module terminal entrant, cette position de temps d'horloge étant fournie par une base de temps synchronisée pour tous les modules terminaux entrants.

Cette technique connue présente l'avantage de pouvoir être utilisée de façon simple sur chaque bloc de données sans discrimination, et notamment de façon globale sur l'ensemble des blocs de données reçus, c'est-à-dire indépendamment de leur appartenance à des connexions individuelles différentes.

De plus, l'utilisation d'un délai de transfert total fixe offre un moyen pratique lorsque l'on désire transférer simultanément des blocs de données sensibles au temps réel (c'est-à-dire sensibles aux délais de transfert et/ou à leurs variations) et d'autres blocs de données peu sensibles au temps réel, ces derniers peuvent accepter des délais de transfert plus longs. En conséquence, on peut prévoir deux valeurs distinctes de délai de transmission total, qui sont sélectivement appliquées aux blocs de données selon qu'ils sont sensibles ou peu sensibles au temps réel.

Dans ce cas cependant, il est nécessaire de disposer d'une mémoire de reséquencement de taille beaucoup plus importante. Elle doit en effet permettre d'assurer le reséquencement des blocs de données peu sensibles au temps réel, ce qui peut conduire à un délai de transfert total fixe important.

L'invention a notamment pour objectif de pallier ces inconvénients de l'état de l'art.

Plus précisément, un objectif de l'invention est de fournir une technique de reséquencement de blocs de données transmis de façon asynchrone dans un système multi-trajet, qui impose un délai maximum réduit, par rapport aux techniques connues.

Un autre objectif de l'invention est de fournir une telle technique de reséquencement, qui soit simple à mettre en oeuvre, et en particulier qui ne nécessite pas de mémoires de reséquencement de taille importante.

L'invention a également pour objectif, au moins dans certains modes de réalisation, d'optimiser le reséquencement respectif des deux types de blocs de données (sensibles ou peu sensibles au temps réel).

En outre, elle cherche à offrir la propriété de pouvoir être utilisée de façon simple sur chaque bloc de données sans discrimination, et notamment de façon globale sur l'ensemble des blocs de données reçus, c'est-à-dire indépendamment de leur appartenance à des connexions individuelles différentes.

Ces objectifs ainsi que d'autres qui apparaîtront par la suite, sont atteints à l'aide d'un procédé de reséquencement de blocs de données, dans un système de commutation asynchrone de blocs de données, la position d'origine d'un bloc de données dans la séquence source étant appelée position séquentielle, ledit système étant susceptible de ne pas respecter l'ordre séquentiel original des blocs de données lors de leur transfert vers un port de sortie, comme dans le cas d'un système de commutation multi-trajets, et comprenant des modules terminaux entrants et sortants interconnectés par au moins un étage de commutation comprenant au moins deux éléments de commutation.

Selon l'invention, on prévoit que, sur chacun des liens internes interconnectant les éléments de commutation entre eux, et sur chacun des liens internes interconnectant les éléments de commutation et les modules terminaux, chacun desdits blocs de données comporte une information de reséquencement (RPI; FRB), permettant de déterminer un seuil temporel de reséquencement tel que :
- la position séquentielle de tous les blocs de données qui seront transférés ultérieurement sur ledit lien n'est pas antérieure audit seuil temporel de reséquencement ;
- et tous les blocs de données transmis sur ledit lien jusqu'audit bloc de données et dont la position séquentielle respective est inférieure ou égale à la valeur dudit seuil temporel de reséquencement, peuvent être remis en séquence.

On notera que l'expression « permettant de déterminer » englobe différentes approches. Elle signifie que l'information de reséquencement peut indiquer explicitement un seuil temporel, ou fournir les moyens permettant implicitement de le calculer.

De façon avantageuse, chacun desdits blocs de données comporte également une information temporelle (TSTP) caractérisant la position séquentielle de ce bloc, ladite information temporelle étant caractérisée par la position de temps d'horloge à laquelle le bloc de données est transmis par le module terminal entrant, ladite position de temps d'horloge étant fournie par une base de temps synchronisée pour tous les modules terminaux entrants.

Selon une variante de l'invention, une information de séquence peut être utilisée à la place d'une information temporelle.

Dans un premier mode de réalisation préférentiel de l'invention, ladite information de reséquencement est un indicateur de bloc de données de reséquencement (RPI), associé à chacun desdits blocs de données, certains desdits blocs de données étant des blocs de reséquencement et un bloc de reséquencement indiquant, pour chacun des liens internes du système de commutation :
- que le seuil temporel de reséquencement sur ce lien correspond implicitement à la valeur de l'information temporelle (TSTP) de ce bloc données de reséquencement,
- que la valeur de l'information temporelle (TSTP) de tous les blocs de données qui seront transférés ultérieurement sur ce lien ne sera pas antérieure à la valeur de l'information temporelle (TSTP) de ce bloc de données de reséquencement,
- et que tous les blocs de données, transmis jusqu'à ce bloc peuvent être remis en séquence ;

chacun des modules terminaux entrants effectuant un marquage de chacun des blocs de données sortants, en affectant systématiquement une information de reséquencement (RPI) audit bloc de données, précisant que ledit bloc de données sortant est toujours un bloc de données de reséquencement ;
chacun des éléments de commutation mettant en oeuvre, sur chacun de ses liens sortants, un marquage de chacun des blocs de données sortants, en affectant une information de reséquencement (RPI) audit bloc de données, précisant si ledit bloc de données est ou n'est pas un bloc de données de reséquencement ;
et chaque module terminal sortant observant ladite information de reséquencement marquée dans chaque bloc de données reçu sur ses liens entrants, et effectuant, chaque fois que cette information de reséquencement (RPI) indique qu'il s'agit d'un bloc de données de reséquencement, la remise en séquence de l'ensemble des blocs de données qu'il a reçus, sur la base des informations temporelles (TSTP) respectives de ces blocs de données.

Selon ce premier mode de réalisation, le seuil de reséquencement est donc implicitement déterminé par la valeur de l'information temporelle d'un bloc de données, lorque ce dernier est bloc de données de reséquencement.

On notera que ce premier mode de réalisation est décrit en supposant que l'on utilise des informations temporelles. Toutefois, cette approche peut être généralisée à l'utilisation d'information de position séquentielle, non impérativement temporelle.

Dans ce cas, le mécanisme peut être décrit de la façon suivante : ladite information de reséquencement est un indicateur de bloc de données de reséquencement (RPI), associé à chacun desdits blocs de données, certains desdits blocs de données étant des blocs de reséquencement et un bloc de reséquencement indiquant, pour chacun des liens internes du système de commutation :
- que le seuil temporel de reséquencement sur ce lien correspond implicitement à la position séquentielle de ce ce bloc données de reséquencement,
- que la position séquentielle de tous les blocs de données qui seront transférés ultérieurement sur ce lien ne sera pas antérieure à la position séquentielle de ce bloc de données de reséquencement,
- et que tous les blocs de données, transmis jusqu'à ce bloc peuvent être remis en séquence.

Alors, à l'entrée du système de commutation, chacun des modules terminaux entrants effectue un marquage de chacun des blocs de données sortants, en affectant systématiquement une information de reséquencement (RPI) audit bloc de données, précisant que ledit bloc de données sortant est toujours un bloc de données de reséquencement;
chacun des éléments de commutation met en oeuvre, sur chacun de ses liens sortants, un marquage de chacun des blocs de données sortants, en affectant une information de reséquencement (RPI) audit bloc de données, précisant si ledit bloc de données est ou n'est pas un bloc de données de reséquencement;
et chaque module terminal sortant observe ladite information de reséquencement marquée dans chaque bloc de données reçu sur ses liens entrants, et effectue, chaque fois que cette information de reséquencement (RPI) indique qu'il s'agit d'un bloc de données de reséquencement, la remise en séquence de l'ensemble des blocs de données qu'il a reçus, sur la base des positions séquentielles respectives de ces blocs de données.

Par la suite, on ne décrit que l'aspect « information temporelle », sachant qu'il est aisé de généraliser.

Selon un mode de réalisation préférentiel de l'invention, les blocs de données vides sont également marqués par un indicateur de bloc de données de reséquencement (RPI).

Dans ce cas, avantageusement, chacun desdits éléments de commutation comprend une mémoire tampon gérée par des moyens d'ordonnancement sélectionnant les blocs de données mémorisés en fonction de leurs informations temporelles (TSTP) respectives,
et le procédé de reséquencement dans l'élément de commutation comprend, pour un bloc de données courant, les étapes de:
- mémorisation, pour chaque lien entrant dudit élément de commutation, de la dernière information temporelle de reséquencement (LFRP) pour ce lien entrant, ladite dernière information temporelle de reséquencement étant l'information temporelle (TSTP) contenue dans le dernier bloc de données dont l'information de reséquencement indique qu'il s'agit d'un bloc de reséquencement ;
- détermination continue d'un seuil correspondant à la plus petite valeur de dernière information temporelle de reséquencement (SLFRP), parmi l'ensemble desdites dernières informations temporelles de reséquencement (LFRP) relatives à tous les liens entrants ;
- et marquage de l'information de reséquencement dudit bloc courant sur chacun des liens sortants :
   - en tant que bloc de données de reséquencement lorsque son information temporelle (TSTPt) est inférieure ou égale audit seuil (SLFRP) ;
   - en tant que bloc de données qui n'est pas de reséquencement lorsque son information temporelle (TSTPt) est supérieure audit seuil (SLFRP).

Selon un autre mode de réalisation préférentiel, chacun desdits éléments de commutation comprend une mémoire tampon avec gestion de type file d'attente FIFO par destination de sortie, et le procédé de reséquencement comprend, pour un bloc de données courant, une étape de marquage en entrée lors de l'écriture du bloc de données dans la une file d'attente FIFO par destination de sortie, et une étape de marquage en sortie lors de la lecture du bloc de données dans la file d'attente FIFO.

De façon avantageuse, dans ce cas, ladite étape de marquage en entrée dans les éléments de commutation comprend les étapes de :
- mémorisation, pour chaque lien entrant dudit élément de commutation, de la dernière information temporelle de reséquencement (I,FRP) pour ce lien entrant, ladite dernière information temporelle de reséquencement étant l'information temporelle (TSTP) contenue dans le dernier bloc de données dont l'information de reséquencement indique qu'il s'agit d'un bloc de reséquencement ;
- détermination continue d'un seuil correspondant à la plus petite valeur de dernière information temporelle de reséquencement (SLFRP), parmi l'ensemble desdites dernières informations temporelles de reséquencement (LFRP) relatives à tous les liens entrants ;
- mémorisation, pour chaque lien sortant dudit élément de commutation, de la plus grande valeur d'information temporelle (HRCT) parmi les informations temporelles (TSTP) associées à tous les blocs de données mémorisés dans la file d'attente FIFO ;
- et marquage dudit bloc du bloc de données courant lors de son écriture dans la file d'attente par un indicateur de bloc de reséquencement détecté (RPD), si son information temporelle (TSTPr) est à la fois :
   - égale audit seuil (SLFRP)
   - et supérieure ou égale à la plus grande valeur d'information temporelle (HRCT).

Avantageusement, ladite étape de marquage en sortie dans les éléments de commutation comprend l'étape de :
- marquage de l'information de reséquencement dudit bloc courant sur chacun des liens sortants:
   - en tant que bloc de données de reséquencement :
      - lorsque son indicateur de bloc de reséquencement détecté (RPD) associé indique qu'il est un bloc de données de reséquencement,
      - ou bien lorsque ce bloc de données est le dernier bloc mémorisé dans la file d'attente FIFO pour la destination de sortie considérée et que son information temporelle (TSTPt) est inférieure ou égale audit seuil (SLFRP),
   - en tant que bloc de données qui n'est pas de reséquencement dans les autres cas.

De façon préférentielle, il est prévu qu'un bloc de données vide sortant soit marqué:
- dans chacun des modules terminaux entrants, systématiquement en tant que bloc de données de reséquencement, et avec une information temporelle (TSTP) égale à la position temporelle d'horloge à laquelle il est transmis ;
- dans chacun des éléments de commutation, sur chacun de ses liens sortants,
- en tant que bloc de données de reséquencement seulement lorsque la valeur dudit seuil (SLFRP) est supérieure ou égale à la valeur de l'information temporelle du dernier bloc de données non vide transmis (LSCT) , et dans ce cas avec une information temporelle (TSTP) égale audit seuil (SLFRP).

Selon une seconde approche du procédé de l'invention, ladite information de reséquencement est un seuil flottant de reséquencement (FRB) explicite, associé à chacun desdits blocs de données, tel que, pour chaque lien interne du système de commutation, ledit seuil flottant (FRB) d'un bloc de données:
- est inférieur ou égal à la valeur de l'information temporelle (TSTP) de ce bloc,
- est supérieur ou égal au seuil flottant (FRB) du bloc de données précédent transmis sur ce lien,
- et indique que tous les blocs de données, transmis jusqu'à ce bloc et dont la valeur de leur information temporelle (TSTP) respective est inférieure ou égale au seuil flottant (FRB) de ce bloc, peuvent être remis en séquence ;

chacun des modules terminaux entrants effectuant un marquage de chacun des blocs de données sortants, en lui affectant systématiquement un seuil flottant (FRB) comme information de reséquencement toujours égal à la valeur de son information temporelle (TSTP) ;
chacun des éléments de commutation mettant en oeuvre, sur chacun de ses liens sortants, un marquage de chacun des blocs de données sortants, en lui affectant une information de reséquencement (FRB), précisant la valeur maximale des informations temporelles de blocs de données qui peuvent être remis en séquence ;
et chaque module terminal sortant observant ledit seuil flottant (FRB) comme information de reséquencement marqué dans chaque bloc de données reçu sur ses liens entrants, et effectuant la remise en séquence des blocs de données reçus et dont l'information temporelle (TSTP) respective est inférieure ou égale au seuil flottant (FRB) du dernier bloc reçu, la remise en séquence étant effectuée sur la base de leurs informations temporelles (TSTP) respectives.

Selon cette seconde approche, le seuil de reséquencement temporel est donc déterminé explicitement, par la valeur du seuil flottant de chaque bloc de données. Comme on le verra par la suite, cette approche permet d'obtenir une meilleure efficacité.

A nouveau, ce mode mode de réalisation est décrit en supposant que l'on utilise des informations temporelles. Toutefois, cette approche peut également être généralisée à l'utilisation d'information de position séquentielle, non impérativement temporelle.

Dans cette seconde approche du procédé selon l'invention, le mécanisme peut être décrit de la façon suivante : ladite information de reséquencement est un seuil flottant de reséquencement (FRB) explicite, associé à chacun desdits blocs de données, tel que, pour chaque lien interne du système de commutation, ledit seuil flottant (FRB) d'un bloc de données:
- correspond à une position séquentielle antérieure ou identique à celle de ce bloc,
- a une valeur supérieure ou égale à celle du seuil flottant (FRB) du bloc de données précédent transmis sur ce lien,
- et indique que tous les blocs de données, transmis jusqu'à ce bloc et dont la position séquentielle respective est antérieure ou identique au seuil flottant (FRB) de ce bloc, peuvent être remis en séquence ;.

Alors, chacun des modules terminaux entrants effectue un marquage de chacun des blocs de données sortants, en lui affectant systématiquement un seuil flottant (FRB) comme information de reséquencement correspondant toujours à sa propre position séquentielle ;
chacun des éléments de commutation met en oeuvre, sur chacun de ses liens sortants, un marquage de chacun des blocs de données sortants, en lui affectant une information de reséquencement (FRB), précisant la valeur maximale des informations temporelles de blocs de données qui peuvent être remis en séquence ;
et chaque module terminal sortant observe ledit seuil flottant (FRB) comme information de reséquencement marqué dans chaque bloc de données reçu sur ses liens entrants, et effectue la remise en séquence des blocs de données reçus et dont la position séquentielle respective est antérieure ou identique au seuil flottant (FRB) du dernier bloc reçu, la remise en séquence étant effectuée sur la base des positions séquentielles respectives de ces blocs de données.

A nouveau, par la suite, on ne décrit que l'aspect « information temporelle », sachant qu'il est aisé de généraliser.

Avantageusement, dans ce second mode de réalisation, ledit seuil flottant de reséquencement (FRB) est inséré dans l'en-tête de chacun desdits blocs de données.

De façon préférentielle, les blocs de données vides sont également marqués par un seuil flottant de reséquencement (FRB).

Selon un mode de mise en oeuvre particulier, chacun desdits éléments de commutation comprend une mémoire tampon gérée par des moyens d'ordonnancement (séquenceur) sélectionnant les blocs de données mémorisés en fonction de leurs informations temporelles (TSTP) respectives,
et le procédé de reséquencement comprend, pour un bloc de données courant, les étapes de :
- mémorisation, pour chaque lien entrant dudit élément de commutation, de la valeur du dernier seuil flottant fourni comme information de reséquencement par les blocs de données reçus (LFRB) sur ce lien entrant ;
- détermination continue d'un seuil correspondant à la plus petite valeur de dernier seuil flottant reçu (SLFRB), parmi l'ensemble desdits derniers seuils flottants fournis par les blocs de données reçus (LFRB) relatifs à tous les liens entrants ;
- et marquage du seuil flottant comme information de reséquencement dudit bloc courant sur chacun des liens sortants tel que la valeur du seuil flottant marqué dans le bloc de données sortant est égale à:
   - la valeur de son information temporelle (TSTPt) lorsque celle-ci est inférieure ou égale audit seuil (SLFRB);
   - la valeur dudit seuil (SLFRB) lorsque son information temporelle (TSTPt) est supérieure audit seuil (SLFRB).

Selon un autre mode de mise en oeuvre, chacun desdits éléments de commutation comprend une mémoire tampon de type file d'attente FIFO par destination de sortie. Dans ce cas, le procédé peut comprendre, pour un bloc de données courant, les étapes de :
- mémorisation, pour chaque lien entrant dudit élément de commutation, de la valeur du dernier seuil flottant fourni comme information de reséquencement par les blocs de données reçus (LFRB) sur ce lien entrant;
- détermination continue d'un seuil correspondant à la plus petite valeur de dernier seuil flottant reçu (SLFRB), parmi l'ensemble desdits derniers seuils flottants fournis par les blocs de données reçus (LFRB) relatifs à tous les liens entrants;
- et marquage du seuil flottant comme information de reséquencement dudit bloc courant sur chacun des liens sortants tel que la valeur du seuil flottant marqué dans le bloc de données sortant est égale à:
   - la valeur de la plus petite des valeurs d'information temporelle (TSTPm) des blocs de données stockés dans la file d'attente FIFO considérée lorsque celle-ci est supérieure audit seuil (SLFRB);
   - la valeur dudit seuil (SLFRB) lorsque la plus petite des valeurs d'information temporelle (TSTPm) est inférieure ou égale audit seuil (SLFRB).

De façon avantageuse, un bloc de données vide sortant est marqué:
- dans chacun des modules terminaux entrants, avec un seuil flottant de reséquencement (FRB) systématiquement égal à la position temporelle d'horloge à laquelle il est transmis ;
- dans chacun des éléments de commutation, sur chacun de ses liens sortants,avec un seuil flottant de reséquencement (FRB) systématiquement égal audit seuil (SLFRP).
Selon un mode de réalisation préférentiel, le système de commutation effectuant un reséquencement distinct des blocs de données d'un premier type qui sont sensibles au temps réel et celui des blocs de données d'un second type qui sont peu sensibles au temps réel, il est appliqué aux blocs de données du second type, les blocs de données du premier type étant remis en séquence au moyen d'une première méthode basée sur l'égalisation du délai de transfert au niveau du port de sortie.

Avantageusement dans ce cas, lesdits premiers et second types de blocs de données sont remis en séquence à l'aide de la même information temporelle (TSTP).

De façon avantageuse, pour effectuer le reséquencement distinct de blocs de données d'un premier type qui sont sensibles au temps réel et celui de blocs de données d'un second type qui sont peu sensibles au temps réel, le système de commutation utilise la même méthode de reséquencement flottant, mais gérée séparément pour chaque type de bloc de données, et en ce que chaque bloc de données comporte :
- une seule information temporelle (TSTP);
- un seul seuil flottant de reséquencement (FRB), avec un indicateur de type de bloc de données associé, dans les blocs de données non vides;
- et deux seuils flottants de reséquencement (FRB), chacun relatif à un type de bloc de données, dans les blocs de données vides.

L'invention concerne également les blocs de données mis en oeuvre selon le procédé de reséquencement décrit ci-dessus.

Un tel bloc de données destiné à être transmis à travers un système de commutation asynchrone susceptible de ne pas respecter l'ordre séquentiel original des blocs de données lors de leur transfert vers un port de sortie, comme dans le cas d'un système de commutation multi-trajet, est caractérisé en ce qu'il comporte une information de reséquencement (RPI ; FRB), indiquant ou permettant de déterminer si la position séquentielle de tous les blocs de données transférés ultérieurement sur un lien entrant ou sortant d'un élément de commutation ne peut pas être antérieure à la position séquentielle du bloc de données considéré.

L'invention concerne encore les éléments de commutation mettant en oeuvre le procédé de l'invention.

Un tel élément de commutation comprend des moyens de reséquencement de blocs de données, effectuant le traitement d'une information de reséquencement (RPI ; FRB) associée à chacun desdits blocs de données, ledit traitement comprenant les opérations suivantes :
- sur chaque lien entrant, analyser, pour chaque bloc de données reçu, ladite information de reséquencement associée indiquant ou permettant de déterminer si la position séquentielle de tous les blocs de données reçus ultérieurement sur ce lien entrant ne peut pas être antérieure à la position séquentielle du bloc de données reçu;
- et, sur chaque lien sortant, générer, pour chaque bloc de données transmis, ladite information de reséquencement associée indiquant ou permettant de déterminer si la position séquentielle de tous les blocs de données transmis ultérieurement sur ce lien sortant ne peut pas être antérieure à la position séquentielle du bloc de données transmis .

D'autres caractéristiques et avantages de l'invention apparaîtront plus clairement à la lecture de la description suivante de modes de réalisation préférentiels de l'invention, donnés à titre de simples exemples illustratifs et non limitatifs et des dessins annexés, parmi lesquels :
- la figure 1 illustre un exemple de reséquencement selon un premier mode de réalisation de l'invention ;
- les figures 2A à 2D présentent différentese mises en oeuvre du premier mode de réalisation de l'invention ;
- les figures 3A et 3B illustrent un exemple de reséquencement selon un second mode de réalisation de l'invention.

### 1 - glossaire

Avant de décrire en détail différents modes de réalisation on définit ci-dessous les abréviations utilisées par la suite :
- FRB :: seuil de reséquencement flottant (Floatting Resequencing Boundary);
- FRP :: point de reséquencement flottant ( Floating Resequencing Point);
- HRCT :: plus grand TSTP reçu (Highest Received Cell Time Stamp);
- IER:: indicateur d'état en reséquencement;
- LFRB :: dernièr seuil FRB reçu (Last Floatting Resequencing Boundary);
- LFRP :: dernier point de reséquencement flottant (Last Floatting Resequencing Point);
- LSCT :: TSTP de la dernière cellule servie (Last Served Cell TSTP);
- RG :: groupe d'acheminement (Routing Group);
- RP :: point de reséquencement (Resequencing Point);
- RPD :: drapeau de RP détecté (Resequencing Point Detected);
- RPI :: indicateur de RP (Resequencing Point Indicator);
- SE :: élément de commutation (Switching Element);
- SLFRP :: plus petite valeur de LFRP (Smaller Last Floatting Resequencing Point);
- SLFRB :: plus petite valeur de LFRB (Smallest Last Floatting Resequencing Boundary);
- TSTP :: information (marquage) temporelle (Time Stamp);
- TSTPm :: plus petite valeur de TSTP de toutes les cellules présentes dans la file d'attente FIFO;
- TSTPr :: valeur de TSTP de la cellule reçue;
- TSTPt :: valeur de TSTP de la cellule servie pour transmission en sortie.

### 2 - premier mode de réalisation

### 2-1 dépendance vis-à-vis du type de gestion du tampon de sortie.

Outre les limites du principe de l'égalisation de temps de transfert décrit en préambule, l'invention repose notamment sur l'observation que la nécessité de reséquencer les blocs de données au niveau du port de sortie ne se caractérise pas de la même manière suivant le type de gestion de la mémoire tampon de sortie que l'on considère. Effectivement le cas d'une gestion de type file d'attente de sortie FIFO classique, les blocs de données doivent arriver séquentiellement dans la file d'attente, étant donné que l'ordre dans lequel les blocs de données seront servis, est ensuite déterminé par leur ordre d'arrivée.

Par contre, dans le cas où le type de gestion de la mémoire tampon de sortie est un séquenceur (en anglais, 'scheduler'), l'ordre dans lequel les blocs de données sont servis pour être transmis en sortie est déterminé pour chaque bloc de données uniquement lorsqu'il est servi (sur la base d'un paramètre temporel de séquencement qui lui est associé), et non pas lorsque le bloc de données arrive dans le séquenceur. Dans ce cas, les blocs de données qui arrivent peuvent facilement être placés directement dans le séquenceur même s'ils ne sont pas encore remis en séquence à condition :
- que le séquenceur serve les blocs de données en fonction d'un paramètre temporel de séquencement qui respecte implicitement la séquence des blocs de données pour chaque connexion (ce qui est le cas le plus fréquent) ;
- et qu'un bit indicateur d'état 'en reséquencement' (IER) soit prévu pour chaque bloc de données dans le séquenceur pour autoriser ou non sa sélection pour être transmis en sortie, selon que ce bloc de données soit déjà reséquencé ou non.

En fait, dans le cas du séquenceur, au lieu d'effectuer un reséquencement sur la base d'une égalisation des délais de transfert, la différence de principe vient du fait qu'un bloc de données peut être considéré comme "reséquencé" (remis en séquence) dès lors que l'on est assuré qu'aucun bloc de données reçu ultérieurement ne peut avoir une position séquentielle antérieure à celle de ce bloc de données. Ainsi, le séquenceur peut effectuer son processus de sélection sur tous ces blocs de données "remis en séquence" sans risque de reséquencement incorrect des blocs de données à la sortie.

### 2.2 Caractéristiques du mécanisme de reséquencement flottant de l'invention

Le principe de reséquencement selon l'invention tire parti des avantages liés à l'utilisation d'une gestion de la mémoire tampon de sortie de type séquenceur (qui permet d'éviter la nécessité d'effectuer une égalisation de délai préalable). Il se caractérise fondamentalement par la gestion de "points de reséquencement flottant" (FRP = Floating Resequencing Points) sur chaque lien interne au sein du réseau de commutation (entre le module terminal entrant et l'élément de commutation (SE) du premier étage, entre les SE de deux étages consécutifs, et entre le SE du dernier étage et le module terminal (sortant).

### 2.2.1 Concept de point de reséquencement flottant

Dans ce qui suit, la description est faite en prenant des cellules comme exemple de blocs de données.

On peut résumer le concept FRP de la façon suivante : lorsqu'on considère des cellules successives qui ne sont pas forcément transférées en séquence sur un lien de transmission, on considère qu'une cellule particulière constitue un "point de reséquencement" (RP) (ou une position temporelle de reséquencement) si la position séquentielle de toute cellule transmise après cette cellule ne ne sera pas antérieure à la position séquentielle de cette cellule.

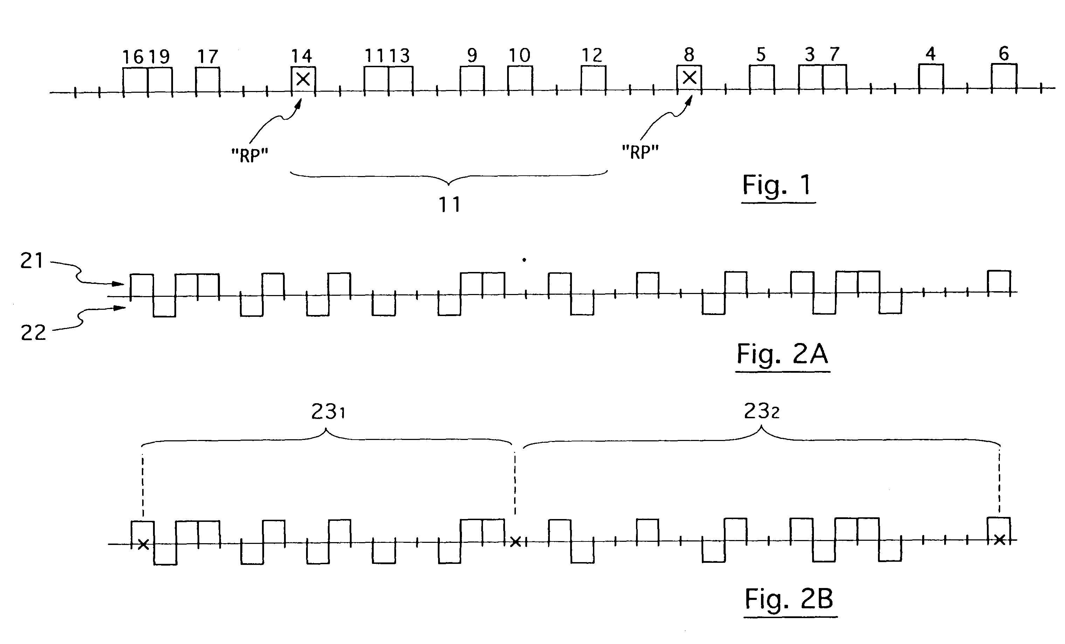

On peut illustrer les cellules RP avec l'exemple simple de la figure 1, où les cellules sont identifiées (pour faciliter la compréhension) par leur position séquentielle. Dans cet exemple, les cellules 8 et 14 sont des cellules constituant des points des reséquencement (RP) car :
- toutes les cellules transmises après la cellule 8 sont correctement placées par rapport à la cellule 8 ;
- toutes les cellules transmises après la cellule 14 sont correctement placées par rapport à la cellule 14.

En fait, si l'on compare cela avec un flux de cellules en séquence, on peut constater que seules les cellules RP ont une position séquentielle correcte, pas les autres cellules.

La valeur de ces points de reséquencement est telle qu'ils déterminent des positions temporelles "flottantes" auxquelles l'ensemble des cellules précédentes peuvent être remises en séquence isolément (indépendamment des cellules consécutives à une cellule RP).

L'invention repose alors sur le traitement de groupes de reséquencement de cellules, délimités par deux RP consécutifs. Au sein d'un tel groupe de reséquencement, les cellules ne sont pas en séquence. Toutefois, ces groupes de reséquencement consécutifs sont eux en séquence.

Par exemple, sur la figure 1, après la cellule RP 8, les cinq cellules (12, 10, 9, 13, il) sont reçues ; elles ne sont pas en séquence . Ensuite, la cellule RP 14 est reçue ; alors, ces six cellules (12 à 14) constituent un groupe de reséquencement de cellules (11) qui ne sont pas en séquence, mais au sein duquel un reséquencement peut être effectué de manière isolée. En outre, un tel groupe de reséquencement de cellules est lui-même en séquence vis-à-vis d'autres groupes de ce type.

Comme observé précédemment, une opération de reséquencement au sein d'un tel groupe de reséquencement de cellules ne doit pas nécessairement être fondée sur une égalisation des temps de transfert et elle semble convenir beaucoup mieux à l'utilisation d'un bit indicateur d'état "en reséquencement" (IER) par cellule dans un séquenceur de sortie.

Dans l'exemple qui précède, lorsque les cinq premières cellules (12, 10, 9, 13, 11) entrent dans le séquenceur, leur bit IER associé ne les valide pas encore pour pouvoir être sélectionnée en sortie. Lorsque la sixième cellule 14 arrive (il s'agit d'une cellule RP), les six cellules apparentées (12 à 14) qui forment un groupe de reséquencement, peuvent être simultanément validées dans le séquenceur en activant leur bit indicateur IER dans l'état en reséquencement, ce qui autorise alors leur sélection par le séquenceur.

En pratique, cette activation de bits IER lors de la réception d'une cellule RP peut être réalisée facilement au moyen d'une commande unique d'activation de tous les bits IER de toutes les cellules précédemment reçues sur la lien concernée (y compris les cellules précédentes 8, 5, 3, 7, 4... qui sont déjà dans cet état).

### 2.2.2 Gestion des points de reséquencement (RP) par lien au sein du commutateur

Après avoir défini le concept RP et expliqué son adéquation avec la fonction de reséquencement inhérente à un séquenceur de sortie, on montre comment les cellules RP peuvent être correctement gérées sur les divers liens internes d'un réseau de commutation à trajets multiples.

### 2.2.2.1 Gestion des RP dans chaque SE

Le problème de base à traiter est lié à la répartition dynamique des différentes cellules acheminées vers un lien sortant ou vers un groupe de liens sortants appelé groupe d'acheminement (RG - Routing Group), dans chaque élément de commutation (SE) n x n (ou n1 x n2). Si l'on considère un lien entrant du SE, chaque cellule reçue est acheminée vers une destination particulière , à savoir un lien sortant ou bien un groupe de liens sortants (RG), et toutes ses cellules sont réparties en conséquence. Ceci est vrai pour chaque lien d'entrée.

Aussi, si l'on suppose que les cellules RP peuvent être détectées sur chaque lien d'entrée, par exemple au moyen d'un bit indicateur de RP (RPI) placé dans chaque cellule RP à l'étape précédente, le problème à résoudre est que les cellules successives transmises sur chaque lien sortant constituent un nouveau flux de cellules avec une séquence entièrement nouvelle (en raison de la distribution des cellules entre liens entrants et liens sortants), pour lequel on doit déterminer quelles sont les cellules RP (c'est-à-dire dans lesquelles le bit RPI doit être mis à 1) sur ce lien sortant.

Avant de proposer une solution à ce problème, on observera que chaque premier lien interne (entre le module terminal entrant et le SE du premier étage) transfère un flux de cellules qui sont toutes en séquence et donc toutes des cellules RP sur chaque lien d'entrée d'un SE de premier étage.

En outre, on suppose ici par exemple l'utilisation d'une information temporelle (TSTP) associée à chaque cellule par le module terminal entrant, comme moyen complémentaire permettant de reconnaître si une cellule est en séquence ou non. D'autres techniques sont également envisageables.

Maintenant, si l'on considère n'importe quel SE donné en général, sur chacun de ses n1 liens entrants, l'arrivée des cellules est surveillée afin de détecter les cellules RP reçues et enregistrer la valeur de l'information temporelle associée (TSTP) dans la dernière cellule RP reçue. En conséquence, à tout moment, le SE connaît, pour chaque lien entrant, la valeur TSTP associée de la dernière cellule RP reçue, appelée dernier point de reséquencement flottant (LFRP).

Ainsi, quand on compare les différentes valeurs de LFRP pour l'ensemble de ses n1 liens entrants, la plus petite valeur de LFRP (SLFRP) au niveau du SE indique la valeur TSTP du dernier FRP qui est globalement valable pour l'ensemble de ses cellules transférées jusqu'à présent dans le SE.

Cette valeur SLFRP peut donc servir à déterminer sur chaque lien sortant si chaque cellule transmise est une cellule RP ou non. Cette détermination se fait comme suit, suivant le type de gestion de mémoire tampon utilisée dans le SE :

### A - Cas d'une gestion de tampon de type "séquenceur" dans le SE

Dans le SE, le fonctionnement du séquenceur individuel par destination de sortie est tel que le serveur de chaque lien sortant ou le serveur multiple d'un groupe d'acheminement, sélectionne toujours en premier la (ou une) cellule qui a la plus faible valeur TSTP (ce qui correspond à une discipline de service dans l'ordre des TSTP).

Comme le séquenceur individuel par destination de sortie (lien sortant ou groupe de liens sortants dit groupe d'acheminement), sert pour transmission en sortie les cellules en attente dans la mémoire tampon en fonction de la valeur de leur information temporelle associée (TSTP), il suffit de comparer la valeur de l'information temporelle de la cellule servie, appelée TSTPt, à la valeur SLFRP en vigueur au niveau du SE :
- Si sa valeur de TSTPt est inférieure ou égale à la valeur SLFRP, la cellule sortie est une cellule RP (et elle est marquée en tant que telle avec un bit RPI mis en 1), étant donné que :
   - le séquenceur sert toujours les cellules dans l'ordre croissant de TSTP ;
   - et qu'aucune cellule suivante ne peut être reçue dans le SE (et donc dans le tampon considéré) avec une valeur TSTP inférieure à la plus petite LFRP en vigueur (SLFRP);
- Si sa valeur de TSTPt, est supérieure à la SLFRP, la cellule servie n'est pas une cellule RP (bit RPI marqué en 0), étant donné qu'il n'est pas exclu qu'une nouvelle cellule soit ensuite reçue dans le tampon avec une valeur de TSTP supérieure à la SLFRP en vigueur, mais toutefois inférieure à la valeur TSTPt de la cellule servie (qui serait donc hors séquence par rapport à cette dernière).

Il faut noter que, dans le cas d'un SE à mémoire tampon partagée, on se réfère ici la mémoire tampon "logique" individuelle par destination de sortie du SE (lien sortant ou groupe d'acheminement).

Par ailleurs, comme il est également important de transmettre sur chaque lien les informations relatives aux points de reséquencement même en l'absence de cellule normale effectivement transmise, un bit RPI et une valeur TSTP doivent également être utilisées dans chaque cellule vide (ou chaque tranche temporelle vide dans le cas d'un mode de transfert interne basé sur des cellules à tranches temporelles multiples à l'intérieur du commutateur) de façon à ce que chaque SE puisse détecter sur chaque lien entrant les nouvelles valeurs RP le plus tôt possible (au lieu d'avoir à attendre la réception de la cellule normale suivante).

Dans le cas d'une gestion de mémoire tampon de type séquenceur, lorsque ce dernier transmet une cellule vide en sortie (aucune cellule dans la mémoire tampon), il faut déterminer quelles cellules vides doivent être marquées comme étant une cellule RP. Pour ce faire, pour chaque séquenceur de sortie, (relatif à une destination de sortie), on conserve un enregistrement de la valeur TSTP de la dernière cellule qui a été servie, appelé LSCT. Ensuite, lors de la transmission d'une cellule vide:
- Si LSCT est inférieure ou égale à SLFRP, la cellule (ou tranche temporelle) vide est marquée comme cellule RP avec un bit RPI à 1 et une valeur TSTP égale à la valeur SLFRP en cours, étant donné qu'aucune nouvelle cellule reçue par la suite ne peut avoir une valeur de TSTP inférieure à la valeur SLFRP. On peut ainsi observer que si la condition de mémoire tampon vide persiste, à chaque fois que la valeur SLFRP augmente dans le SE, la cellule vide RP générée contient une valeur TSTP qui augmente comme SLFRP.
- Tant que LSCT est supérieure à SLFRP, la cellule (ou tranche temporelle) vide n'est pas marquée comme étant une cellule RP, dans la mesure où une cellule reçue par la suite peut avoir une valeur TSTP supérieure à la valeur SLFRP, mais toutefois inférieure à la valeur LSCT (qui serait donc hors séquence par rapport à la dernière cellule transmise).

### B - Cas d'une gestion de tampon de type "file d'attente FIFO" dans le SE

Dans ce cas, la détermination des cellules RP pour chaque destination de sortie (lien sortant ou RG) est différente et relativement moins efficace, car chaque file d'attente FIFO par destination de sortie gérant la mémoire tampon sert les cellules en attente dans leur ordre d'arrivée et non pas (en général) dans l'ordre TSTP, dans la mesure où il peut y avoir des cellules non reçues en séquence dans file d'attente FIFO.

Dans le cas présent de files d'attente FIFO pour chaque destination de sortie (lien ou groupe de liens sortant), on conserve un enregistrement de la valeur TSTP la plus élevée parmi toutes les cellules présentes dans chaque file d'attente de la mémoire tampon, valeur appelée HRCT.

Lorsqu'une nouvelle cellule reçue est mémorisée dans une file d'attente de la mémoire tampon, cette cellule sera une cellule RP si et seulement si les deux conditions suivantes sont satisfaites :
- la valeur TSTP de la cellule reçue, appelée TSTPr, est égale à la valeur SLFRP,
- et cette valeur TSTPr de la cellule reçue est supérieure ou égale à HRCT.

On note alors ce fait en mettant à 1 un drapeau de RP détecté (RPD) associé à la cellule entrant dans la file d'attente de la mémoire tampon.

Ensuite, lorsqu'une cellule est servie pour être transmise en sortie à partir d'une file d'attente FIFO, la cellule transmise est une cellule RP (et marquée en tant que telle avec un bit RPI en 1), soit si le drapeau RPD qui lui est associé se trouve en 1, soit si les deux conditions suivantes sont satisfaites :
- la cellule est la dernière à être servie (une seule cellule en attente dans la file d'attente de la mémoire tampon)
- la valeur TSTP de la cellule est inférieure ou égale à SLFRP.

Par ailleurs, une cellule (ou tranche temporelle) vide (générée lorsque la mémoire tampon est vide) peut être marquée comme cellule (ou tranche temporelle) vide RP comme suit (exactement comme dans le cas A ci-dessus):
- Si LSCT est inférieure ou égale à SLFRP, la cellule (ou tranche temporelle) vide est marquée comme étant une cellule RP avec un bit RPI à 1 et une valeur TSTP égale à la valeur SLFRP en vigueur.
- Si LSCT est supérieure à SLFRP, la cellule (ou tranche temporelle) vide n'est pas marquée comme étant une cellule RP.

On peut donc constater que les deux types de techniques de gestion de la mémoire tampon (séquenceur ou file d'attente FIFO), permettent d'effectuer une gestion des corrélations de RP entre les liens entrants et sortants dans un SE. Le traitement interne des RP dans le SE n'est pas le même (cas A ou B), mais le protocole utilisé sur chaque lien pour signaler les RP peut être identique.

Toutefois, il est important de noter que les performances obtenues seront meilleures avec des séquenceurs qu'avec des files d'attente FIFO dans les SE. En effet, en raison du mécanisme de reséquencement effectué de manière systématique par les séquenceurs dans chaque SE sur toutes les cellules en attente dans la mémoire tampon le flux de cellules de sortie transmis par chaque SE sur chaque lien sortant sera partiellement remis en séquence (partiellement, parce que, lorsque la valeur TSTP de la cellule prise en charge est supérieure à SLFRP, auquel cas la cellule servie par le séquenceur n'est pas une cellule RP, une nouvelle cellule peut encore être reçue ultérieurement avec une valeur TSTP inférieure à celle de la cellule servie, c'est-à-dire hors séquence par rapport à cette dernière).

Ainsi, la longueur des groupes de reséquencement transmis dans lesquels les cellules ne sont pas en séquence (chaque bloc étant délimité par 2 RP consécutifs, comme le montre par exemple la figure 1), sera généralement plus courte si l'on utilise un séquenceur (plutôt qu'une file d'attente FIFO) comme technique de gestion de la mémoire tampon dans les SE.

### 2.2.2.2 Points de reséquencement flottant (FRP) obtenus au sein du commutateur.

Si tous les SE du réseau de commutation effectuent une gestion des RP telle qu'elle est définie dans le paragraphe 2.2.2.1. ci-dessus, il en résulte que, sur chaque lien entre étages SE successifs, des points de reséquencement flottant (FRP) sont signalés par le SE en amont sur des cellules particulières (normales ou vides) afin de délimiter des groupes de reséquencement successifs de cellules qui ne sont pas en séquence entre deux RP. Toutefois, cette segmentation du flux de cellules par des RP en de tels groupes de reséquencement est uniquement valable pour un lien donné entre un SE en amont et un SE en aval.

Comme chaque SE répartit à nouveau les cellules d'entrée reçues vers diverses sorties en engendrant ainsi de nouveaux flux de cellules sur ses liens de sortie, la segmentation RP en groupes de reséquencement sur ces derniers sera différente de celle sur les liens entrants. Toutefois, la gestion des RP dans chaque SE effectue les corrélations appropriées entre les cellules RP reçues (sur les liens entrants) et celles transmises (sur les liens sortants), d'où le nom de technique à points de reséquencement flottant lorsque l'on considère le cas général d'un réseau de commutation à plusieurs étages.

### 2.3. Comparaison avec l'art antérieur

Par comparaison avec un procédé de reséquencement classique fondé sur une égalisation des délais, la technique proposée de reséquencement flottant offre les caractéristiques suivantes :
- Les performances de transfert à travers les étages de SE du réseau de commutation sont inchangées lorsqu'on utilise le procédé de reséquencement selon l'invention, étant donné que la distribution des délais d'attente dans les étages successifs du réseau de commutation est exactement la même qu'avec une méthode de reséquencement classique avec une gestion de mémoire tampon du type séquenceur ou file d'attente FIFO dans les SE respectivement.
- Dans le module terminal de sortie, le délai de reséquencement nécessaire pour chaque cellule est généralement plus faible avec la nouvelle technique qu'avec la technique classique, mais le délai de transfert total, comprenant le délai de reséquencement, est réduit, et il n'est plus constant (il n'est plus égal à un délai de transfert total fixe prédéterminé).

Cette dernière propriété implique donc que les positions temporelles des cellules "reséquencées" dans la mémoire tampon de sortie (séquenceur) ne soit plus homologues aux positions temporelles de ces cellules lors de leur arrivée au niveau des modules terminaux d'entrée (ces deux positions temporelles pour chaque cellule n'étant plus séparées par un délai de transfert total fixe).

Avec la nouvelle technique de reséquencement, l'arrivée des cellules dans la mémoire tampon du port de sortie correspond à l'arrivée des cellules à l'entrée affectée d'une certaine fluctuation de délai (c'est-à-dire une variation de délai de transfert) reflétant les conflits d'accès entre les cellules dans les SE lors de leur acheminement vers leurs ports de sortie destinataires respectifs.

### 2.4 Applications

Si l'on considère le transfert simultané de cellules sensibles au temps réel (c'est-à-dire sensibles au délai de transfert et/ou à ses variations) et de cellules peu sensibles au temps réel (c'est-à-dire peu sensibles au délai de transfert et/ou à ses variations), ce dernier type (ayant une priorité de délai inférieure) pouvant connaître des délais de transferts variables plus importants à travers le commutateur, l'application directe de la technique proposée de reséquencement flottant au flux de cellules global (c'est-à-dire sans distinguer chaque type de flux de cellules pour effectuer le reséquencement) ne permet pas d'obtenir des performances optimales, étant donné que la présence du flux de cellules peu sensibles au temps réel et présentant une distribution plus étendue des délais d'attente dans les SE, tend à augmenter la longueur des groupes de reséquencement de cellules qui ne sont pas en séquence (et par conséquent accroître le délai de reséquencement au niveau de la sortie pour l'ensemble des cellules).

La fluctuation du délai de transfert qui en résulte pourrait donc être excessive pour le flux de cellules sensibles au temps réel.

Deux solutions sont alors possibles pour supprimer un tel impact sur le transfert des cellules sensibles au temps réel :
A - Soit appliquer de manière sélective deux techniques différentes de reséquencement dans les terminaisons de sortie : la méthode classique d'égalisation des délais pour le transfert des cellules sensibles au temps réel et la méthode flottante pour le transfert des cellules peu sensibles au temps réel (en fait, lorsqu'on utilise la même information temporelle (TSTP), les deux méthodes de reséquencement peuvent être utilisées de manière compatible pour différents flux de cellules).
B - Soit appliquer la même technique de reséquencement flottant aux deux types de transfert des cellules, mais gérée séparément pour chacun d'eux dans l'ensemble du commutateur et dans les modules terminaux de sortie.

Lorsqu'on utilise la solution A, le délai de transfert des cellules sensibles au temps réel non seulement n'est pas affecté par la présence de cellules peu sensibles au temps réel, mais en outre leur délai de transfert reste constant et égal à un délai de transfert total fixe prédéterminé (c'est-à-dire qu'aucune variation du délai de transfert des cellules sensibles au temps réel n'est introduite à travers le commutateur).

Cette situation est illustrée par les figures 2A à 2D, dans lesquelles les cellules "supérieures" 21 illustrent des cellules peu sensibles au temps réel, et les cellules "inférieures" 22 correspondant aux cellules sensibles au temps réel. La figure 2A illustre un exemple de flux de cellules, et les figures 2B à 2D la façon dont sont repérés les groupes de reséquencement de cellules selon différents modes de mise en oeuvre.

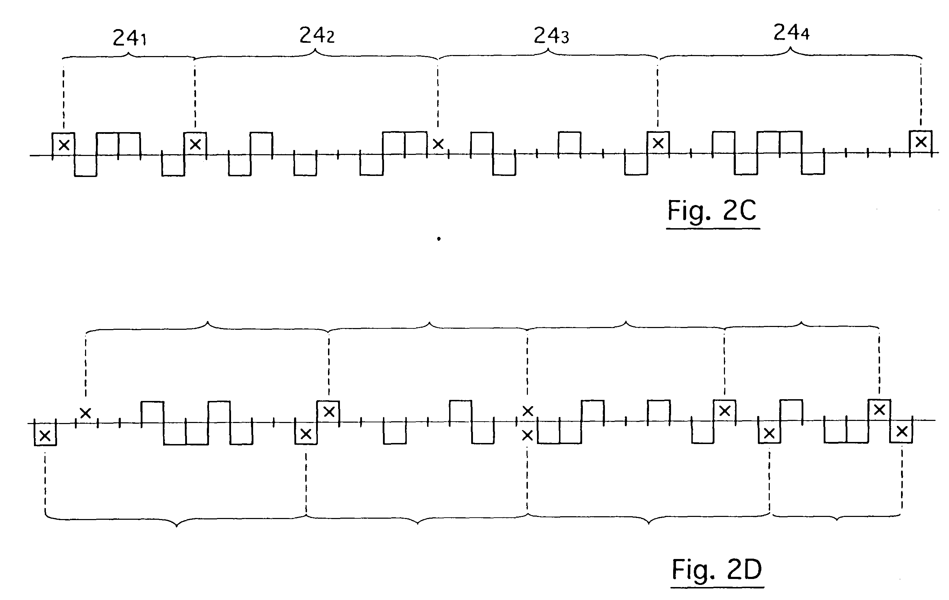

La gestion des points de reséquencement (RP) dans les SE peut être effectuée soit sur le flux global des cellules (sans distinguer les deux flux de cellules) (voir les blocs 23₁ et 23₂ de la figure 2B), soit de manière sélective uniquement sur les cellules peu sensibles au temps réel (c'est-à-dire en ne tenant pas compte des cellules cellules sensibles au temps réel dans la gestion des RP (voir les blocs 24₁ et 24₂ de la figure 2C).

Lorsqu'on utilise la solution B, deux gestions distinctes des RP doivent être effectuées simultanément, mais séparément, dans les SE, une pour chaque type de flux de cellules. Dans ce cas, en conséquence :
- chaque SE gère deux paramètres LFRP par lien d'entrée, deux paramètres SLFRP au niveau du SE, deux paramètres LSCT par lien sortant, et (dans le cas de la mise en file d'attente FIFO uniquement) deux paramètres HRCT par lien sortant (voir le paragraphe 2.3.2.1 );
- un seul bit RPI par cellule normale suffit si l'on suppose que cette dernière achemine également une information caractéristique indiquant s'il s'agit d'une cellule sensible ou peu sensible au temps réel ;
- par contre, deux bits RPI et deux champs TSTP doivent être prévus dans une cellule (ou tranche temporelle) vide, car cette dernière pourrait constituer un point de reséquencement (RP) simultanément pour les deux types de flux de cellules.

Par la suite, dans chaque module terminal de sortie, les deux types de groupes de reséquencement de cellules hors séquence (pour chaque type de flux de cellules), dont les cellules sont multiplexées dans le flux global de cellules reçu, sont séparés et leurs cellules sont remises en séquence de manière sélective sur la base de leurs RP respectifs (voir figure 2D).

### 3. Second mode de réalisation

### 3.1 Introduction

Dans le premier mode de réalisation, la méthode particulièrement simple utilisée pour désigner une cellule RP consiste à mettre en 1 un bit indicateur de RP (RPI) dans la cellule lorsque celle-ci est validée comme point de reséquencement.

Toutefois, ce qui constitue a priori l'avantage de cette méthode simple (un seul bit RPI requis par cellule) est susceptible d'entraîner des performances limitées dans certaines applications pratiques, en raison de la probabilité non négligeable de l'incapacité de cette méthode à identifier tous les points de reséquencement possibles. Les RP non identifiés pourraient entrainer alors une augmentation excessive de la taille des groupes de reséquencement de cellules qui ne sont pas en séquence, et donc donner lieu à des délais de reséquencement plus importants.

On peut illustrer l'effet potentiellement préjudiciable du principe décrit pour le premier mode de réalisation au moyen d'un exemple de flux de cellules créé dans un SE pour un lien sortant (ou un groupe d'acheminement) donné conforme au tableau 1.

Cet exemple présente une chaîne de 20 cellules consécutives sur les positions temporelles de cellule 1 à 20 (pour plus de simplicité, on suppose qu'il n'y a aucune cellule vide). La deuxième ligne du tableau indique les positions séquentielles respectives des cellules seulement pour mettre en évidence les cellules qui ne sont pas en séquence, et une troisième ligne du tableau donne leurs valeurs TSTP respectives supposées.

On peut observer ici 3 groupes de reséquencement consécutifs (de cellules qui ne sont pas en séquence) délimités par 4 points de reséquencement (RP) consécutifs, c'est-à-dire dans les positions de cellules 1, 7, 13 et 20. Par ailleurs, la quatrième ligne du tableau fournit, pour chaque position temporelle de cellule, la valeur SLFRP supposée (plus petit dernier point de reséquencement flottant) en cours au niveau du tampon SE (voir la définition de SLFRP au paragraphe 2.3.2.1), pour deux exemples légèrement différents A et B.

Ensuite, la cinquième ligne du tableau indique les points de reséquencement résultants qui pourraient être identifiés en utilisant le principe de la proposition initiale. Pour plus de simplicité, on suppose qu'il n'y a pas de délai d'attente pour chaque cellule dans la mémoire tampon SE.

Comme on peut le voir, les points de reséquencement potentiels dans les positions de cellules 7 et 13 ne peuvent pas être identifiés dans l'exemple B (alors qu'ils le peuvent dans l'exemple A), d'où une augmentation de la longueur du groupe de reséquencement (de cellules qui ne sont pas en séquence) à 20 cellules (dans cet exemple). En conséquence, la sixième ligne du tableau indique que dans le cas B, le reséquencement des cellules 2 à 20 ne se fera qu'à la réception de la 20ème cellule, alors qu'elle est plus progressive dans le cas A (cellules 2 à 7, puis 8 à 13, et enfin 14 à 20).

Un examen plus minutieux des valeurs SLFRP supposées dans les positions de cellule 7 et 13 explique le fonctionnement inadéquat dans le cas B. Dans la position de cellule 7, la valeur TSTP de la cellule est 143. Dans le cas A, la valeur SLFRP est également supposée être égale à 143. Aucune autre cellule ne peut donc arriver avec une valeur TSTP inférieure et la cellule en cours d'examen est identifiée comme étant un nouveau RP.

A l'inverse, dans le cas B, la valeur SLFRP est supposée être seulement égale à 141 ; en conséquence, comme on ne sait pas si une autre cellule avec une valeur TSTP inférieure à 143 peut encore arriver, la cellule en cours d'examen ne peut pas être identifiée comme étant un nouveau RP.

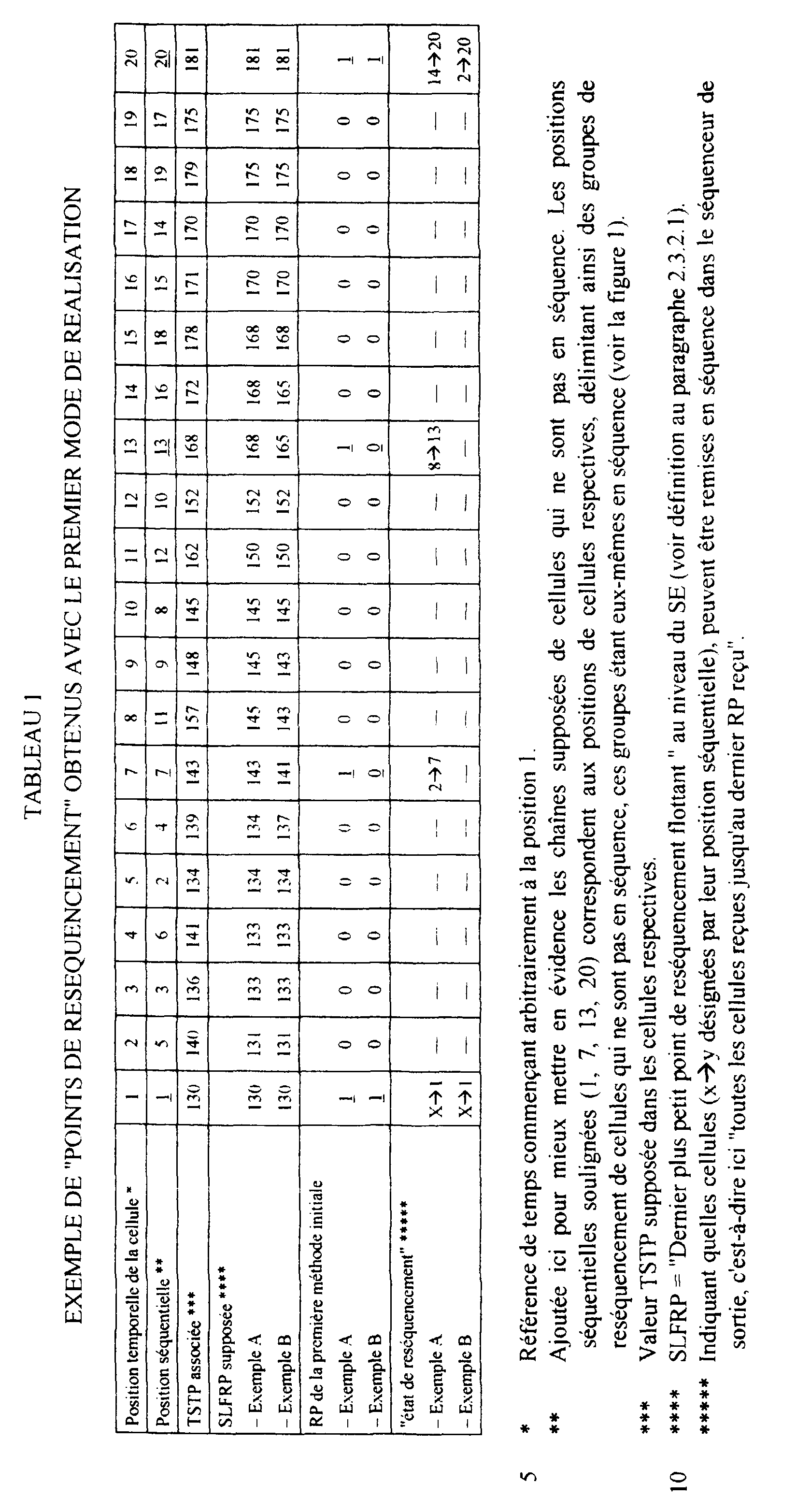

De même, dans la position de cellule 13, la valeur TSTP de la cellule est 168 dans le cas A, SLFRP = 168 identifie un nouveau RP alors que dans le cas B, SLFRP = 165 ne permet pas d'identifier un nouveau RP.

En d'autres termes, parmi les cellules correspondant potentiellement à un nouveau RP, ce dernier ne peut pas être identifié à chaque fois que la valeur TSTP de la cellule s'avère dépasser la valeur SLFRP en cours au niveau du SE. Comme la probabilité de telles circonstances n'est pas négligeable dans des fonctionnements pratiques de SE, un principe plus efficace tel que décrit ci-dessous peut être utilisé:

### 3.2 principe

Dans le second mode de réalisation améliorée, la méthode pour identifier les paramètres de reséquencement flottant (utilisée pour commander le processus de reséquencement des cellules) se fonde sur les caractéristiques suivantes:
- Identification (sur chaque lien) du "seuil de reséquencement flottant" (FRB) en cours associée à chaque cellule, les valeurs FRB de deux cellules consécutives étant soit constantes, soit croissantes (jamais décroissantes)
- Pour n'importe quelle cellule donnée, ses valeurs TSTP et FRB sont toujours telles que son seuil FRB est inférieur ou égal à sa valeur de TSTP;
- Au niveau du module terminal de sortie, l'ordonnanceur (séquenceur) de sortie peut mettre en "état de reséquencement" toutes les cellules reçues dont la valeur TSTP est inférieure ou égale à la dernière valeur de seuil FRB reçue;
- La méthode utilisée pour transférer la valeur de seuil FRB associée à chaque cellule consiste à rajouter ce paramètre dans l'en-tête de la cellule.

Cette nouvelle méthode permet effectivement de découpler le paramètre de reséquencement flottant (ici FRB) de la propre valeur TSTP de la cellule, et donc de supprimer les limites rencontrées avec le premier mode de réalisation. En outre, il apparaît que cette seconde méthode offre en fait une résolution plus fine des délais de reséquencement qu'avec la première méthode basée sur le principe des points de reséquencement flottant.

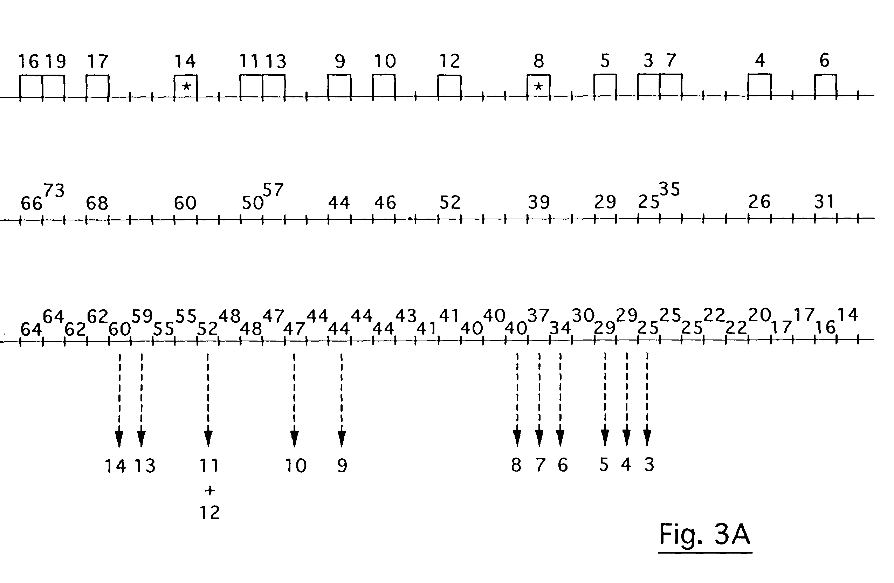

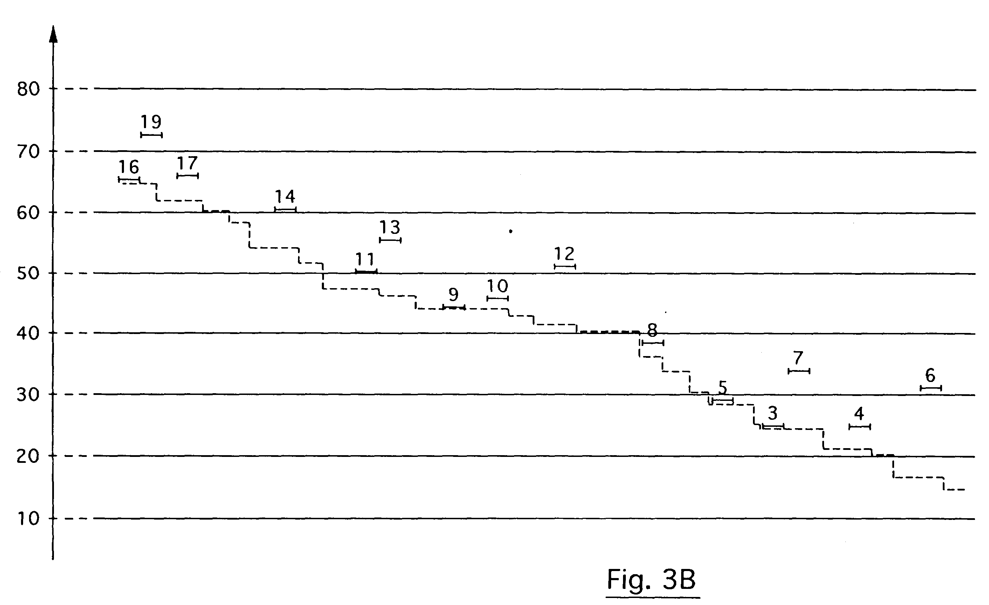

Afin de mieux illustrer la comparaison entre le premier et le second mode de réalisation, les figures 3A et 3B et le tableau 2 montrent l'application du nouveau principe à des exemples exactement identiques à ceux respectivement de la figure 1 et du tableau 1.

Sur les figures 3A et 3B, on peut voir un déroulement type de l'opération de reséquencement flottant sur la séquence de cellules conformément au principe de la nouvelle méthode. Ce déroulement dépend de l'évolution supposée cellule par cellule de la valeur de seuil FRB par rapport à la valeur TSTP des cellules reçues.

Plus précisément, la figure 3A présente successivement les positions séquentielles de chaque cellule dans la séquence (numérotées selon la séquence d'origine), les valeurs TSTP et FRB supposée, et les cellules (identifiées par leur position séquentielle) en état « reséquencé ». L'exemple considéré est le même que celui de la figure 1. Les cellules 8 et 14 (notées par une astérisque) sont les points de reséquencement flottant selon le principe du premier mode de réalisation.

La figure 3B montre, en trait plein le TSTP de chaque cellule normale, et en pointillés le FRB des toutes les cellules consécutives (normales ou vides).

Dans le tableau 2, on peut également voir la progression du seuil de reséquencement flottant sur le flux de cellules. On peut noter ici que cette opération progressive est désormais assez similaire pour les deux cas supposés A et B, ce qui montre que la seconde méthode n'est plus affectée par des limitations inadéquates quant à l'aptitude à identifier toutes les bornes possibles de reséquencement.

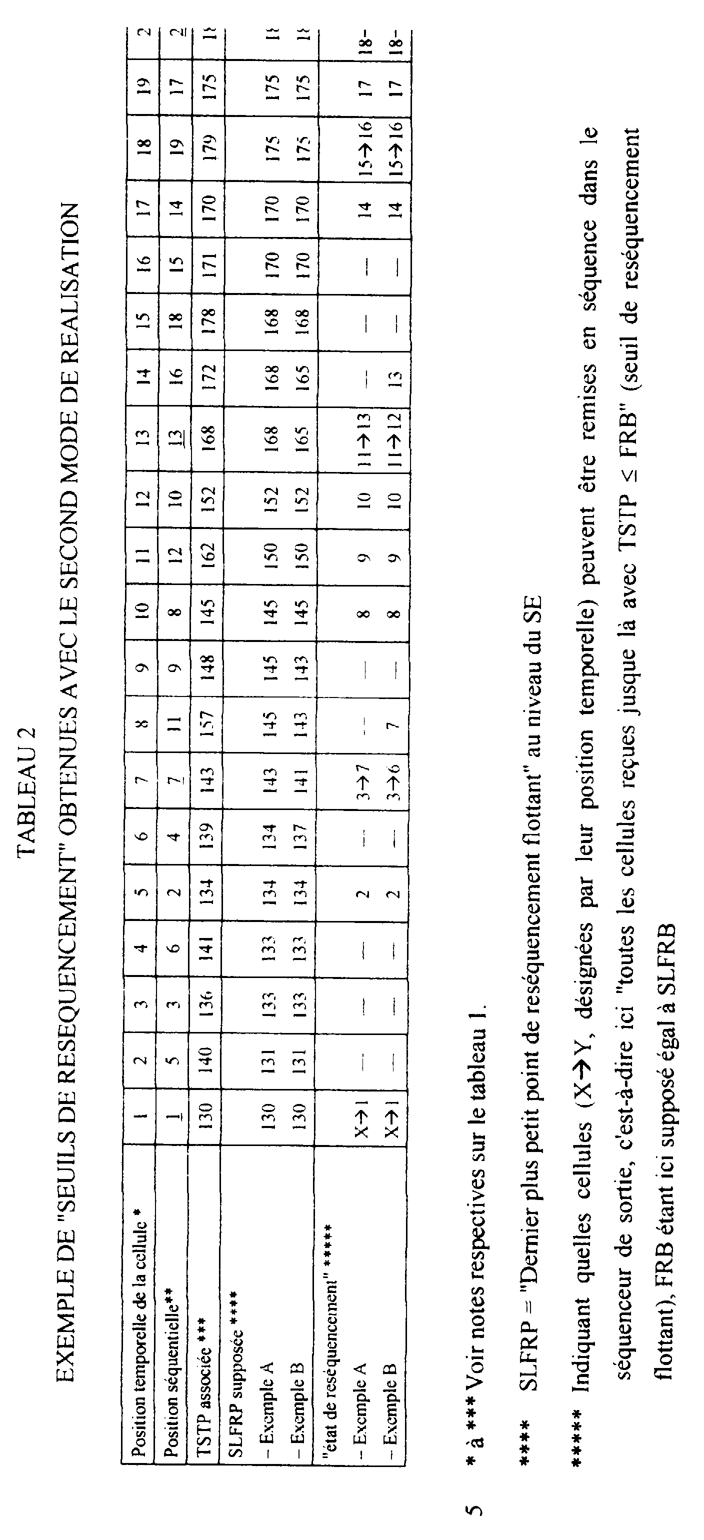

### 3.3 Description du second mode de réalisation

### 3.3.1. Gestion des seuils de reséquencement flottant (FRB) dans le commutateur

Après avoir donné un premier aperçu du concept de FRB nouvellement proposé, les sections suivantes décrivent la manière dont les FRB peuvent être correctement gérées sur les divers liens internes d'un réseau de commutation multi-trajets, jusqu'au séquenceur de sortie situé au niveau du module de sortie.

### 3.3.1.1 Gestion des FRB dans chaque élément de commutation (SE)

Le problème de base à traiter est lié à la distribution des cellules reçues sur différents liens entrants et acheminées vers divers liens sortants ou vers divers groupes de liens sortants appelés groupes d'acheminement (RG), dans chaque élément de commutation (SE) n x n (ou n1 x n2). Si l'on considère un lien entrant du SE, chaque cellule reçue est acheminée vers un lien ou un groupe de liens destinataire particulier et toutes ses cellules sont réparties en conséquence. Ceci est vrai pour chaque lien d'entrée.

Alors que les cellules successivement reçues sur chaque lien entrant fournissent les valeurs FRB qui leur sont respectivement associées, le nouveau flux de cellules généré au niveau de chaque liaison de sortie avec une séquence de cellules entièrement nouvelle (en raison de la répartition entre entrées et sorties) nécessite la redéfinition de la valeur de seuil FRB correcte devant être affectée à chaque cellule transmise en sortie.

Avant d'expliquer une solution à utiliser pour déterminer ces valeurs de seuil FRB, on peut observer que les premiers liens internes dans le réseau de commutation (c'est-à-dire raccordant les modules terminaux d'entrée aux entrées du SE du premier étage) transfèrent des cellules qui sont toutes en séquence. En conséquence, sur ces premiers liens, la valeur FRB associée à chaque cellule est toujours égale à la valeur TSTP de la cellule.

Les cellules (ou tranches temporelles) vides se voient également attribuer ici une valeur FRB égale à la valeur du compteur TSTP en cours (c'est-à-dire comme s'il s'agissait de cellules normales).

Maintenant, de façon générale, si l'on considère n'importe quel SE donné, sur chacun de ses n1 liens d'entrée, l'arrivée des cellules est surveillée afin de noter la dernière valeur FRB reçue (en n'oubliant pas qu'entre deux cellules consécutives [normales ou vides], les valeurs FRB sont toujours identiques ou croissantes, mais jamais décroissantes).

En conséquence, à tout moment, le SE connaît, pour chaque lien d'entrée, la dernière valeur FRB (LFRB) reçue. Ainsi, en comparant en permanence toutes les valeurs LFRB pour l'ensemble de ses n1 liens d'entrée, la plus petite valeur LFRB (SLFRB) au niveau du SE indique la valeur FRB minimale en cours qui est globalement valable pour toutes les cellules en cours de transfert par l'intermédiaire du SE. A aucun moment une nouvelle cellule reçue dans le SE ne pourra donc avoir une valeur TSTP inférieure à la valeur SLFRB.

En conséquence, ce paramètre SLFRB au niveau du SE est un paramètre fondamental pour déterminer la valeur de seuil FRB à attribuer à chaque cellule transmise sur chaque lien de sortie.

Si l'on considère le cas simple de SE sans mémoire tampon (ou de SE équivalents dotés de mémoires tampons transférant les cellules sans délai d'attente en l'absence de conflit d'accès), la valeur FRB pour chaque cellule sortie serait systématiquement égale à la valeur SLFRB.

Pour des cas pratiques de SE avec mémoires tampons où se produisent des conflits d'accès entre cellules, la détermination des valeurs FRB pour les cellules transmises dépend du type de gestion considérée pour leur mémoire tampon. On envisage ici encore deux cas principaux, à savoir SE avec gestion du type séquenceur basé sur TSTP et SE avec gestion du type file d'attente FIFO.

### A - Cas d'une gestion de tampon de type "séquenceur" dans le SE

Dans le SE, le fonctionnement du séquenceur individuel par destination de sortie est tel que le serveur de chaque lien sortant ou le serveur multiple d'un groupe d'acheminement, sélectionne toujours en premier la (ou une) cellule qui a la plus faible valeur TSTP (ce qui correspond à une discipline de service dans l'ordre des TSTP).

On peut noter qu'un tel séquenceur basé sur TSTP effectue un certain reséquencement des cellules au niveau du SE. Toutefois, étant donné que nous supposons qu'il sert toujours une cellule tant qu'il y en a dans la mémoire tampon, ce reséquencement demeure partiel car il ne s'applique qu'aux cellules qui se trouvent à ce moment-là dans la mémoire tampon.

Dans un tel séquenceur basé sur TSTP, la valeur de seuil FRB pour chaque cellule servie pour transmission en sortie est simplement déterminée au moment du service de la cellule comme étant égale à Min [SLFRB ; TSTPt], TSTPt étant définie comme la valeur TSTP de la cellule servie pour transmission en sortie.

En effet :
- Si SLFRB est supérieure ou égale à TSTPt, comme le séquenceur prend en charge les cellules du tampon dans l'ordre croissant des TSTP, et comme aucune nouvelle cellule ne peut arriver avec une valeur TSTP inférieure à SLFRB, le serveur ne servira plus de cellule ayant une valeur TSTP inférieure à TSTPt. En conséquence, la valeur FRB à attribuer à la cellule servie est égale à TSTPt.
- Si SLFRB est inférieure à TSTPt, comme une nouvelle cellule avec une valeur TSTP inférieure à TSTPt (mais supérieure ou égale à SLFRB) peut encore arriver dans la mémoire tampon, la valeur FRB à attribuer à la cellule cellule servie est égale à SLFRB.

Par ailleurs, comme il est également important de transmettre sur chaque liaison les informations relatives aux valeurs FRB même en l'absence de cellule effectivement transmise, c'est-à-dire d'associer également une valeur FRB à chaque cellule (ou tranche temporelle) vide générée lorsque le serveur trouve la mémoire tampon vide. Ceci permet de fournir la valeur FRB la plus récente le plus tôt possible (sans avoir à attendre la cellule transmise suivante). En conséquence, une valeur FRB égale à la valeur SLFRB en cours est systématiquement associée à chaque cellule (ou tranche temporelle) vide générée.

### B - Cas d'une gestion de tampon de type "file d'attente FIFO" dans le SE

Dans le cas classique d'une gestion de mémoire tampon du type file d'attente FIFO, le serveur de la file d'attente par destination de sortie (lien sortant ou groupe d'acheminement sortant) sélectionne toujours les cellules en fonction de leur ordre d'arrivée dans la file d'attente (c'est-à-dire indépendamment de leur valeur TSTP respective).

Dans ce cas, la détermination de la valeur FRB à associer à chaque cellule servie est plus complexe que dans le cas d'un séquenceur basé sur TSTP, étant donné qu'elle dépend de l'évolution des valeurs TSTP des cellules successives alors présentes dans la file d'attente. En effet, si on définit TSTPm comme étant la plus petite valeur de TSTP de toutes les cellules alors présentes dans la file d'attente FIFO pour la destination de sortie considérée, la valeur FRB déterminée au moment du service de la cellule, est égale à Min (SLFRB; TSTPm), sur la base du raisonnement suivant :
- Si SLFRB est inférieure à TSTPm, comme une nouvelle cellule avec TSTP inférieure à TSTPm (mais supérieure ou égale à SLFRB) peut encore arriver dans la file d'attente, la valeur FRB à attribuer à la cellule servie est égale à SLFRB.
- Si SLFRB est supérieure ou égale à TSTPm, comme toutes les cellules alors présentes dans la file d'attente ont une valeur TSTP supérieure ou égale à TSTPm et comme aucune nouvelle cellule ne peut arriver avec une valeur TSTP inférieure à SLFRB, le serveur ne servira plus de cellule avec une valeur TSTP inférieure à TSTPm. En conséquence, la valeur FRB à attribuer à la cellule servie est égale à TSTPm.

En conséquence, dans le cas d'une gestion du type file d'attente FIFO, il est nécessaire de déterminer en continu la valeur du paramètre TSTPm (c'est-à-dire la plus petite valeur TSTP de toutes les cellules alors présentes dans chaque file d'attente de la mémoire tampon). Différentes mises en oeuvre peuvent être envisagées pour la détermination cellule par cellule de la valeur TSTPm. La solution la plus simple consiste à utiliser au moment du service des cellules un dispositif de tri des valeurs TSTP des cellules présentes dans la file d'attente FIFO, afin d'en déterminer la plus petite valeur TSTPm.

Par ailleurs, comme dans le cas ci-dessus d'un séquenceur basé sur TSTP, une valeur FRB égale à SLFRB est systématiquement associée à chaque cellule vide générée lorsque la file d'attente FIFO est vide.

On peut donc constater que les deux types de techniques de gestion de la mémoire tampon (séquenceur ou file d'attente FIFO), permettent d'effectuer une gestion des corrélations de FRB entre les liens entrants et sortants dans un SE. Le traitement interne des FRB dans le SE n'est pas le même (cas A ou B), mais le protocole utilisé sur chaque lien pour signaler les FRB peut être identique.

### 3.3.1.2 Seuils de reséquencement flottant (FRB) obtenus au sein du commutateur.

Si tous les SE du réseau de commutation effectuent une gestion des FRB telle qu'elle est définie au paragraphe 3.3.1.1. ci-dessus, on peut se rendre compte que, sur chaque liaison entre phases SE successives, des seuils de reséquencement flottant (FRB) sont attribués à chaque cellule (normale ou vide) ces valeurs FRB étant propres à chaque lien interne et redéfinies pour chaque cellule lors de son transfert d'un lien entrant vers un lien sortant dans un SE.

En d'autres termes, tout en distribuant les cellules des liens entrants vers les liens sortants, chaque SE effectue les corrélations requises entre les valeurs FRB reçues qui leur sont associées afin de déterminer les nouvelles valeurs FRB sur chaque lien sortant, d'où le nom de technique à seuils de reséquencement flottant lorsque l'on considère le cas général d'un réseau de commutation à plusieurs étages.

### 3.3.2 Comparaison avec l'état de l'art

Par comparaison avec un procédé de reséquencement classique fondé sur une égalisation des délais, cette seconde technique de reséquencement flottant selon l'invention offre les caractéristiques suivantes :
- Les performances de transfert à travers les étages de SE du réseau de commutation sont inchangées lorsqu'on utilise le procédé de reséquencement selon l'invention, étant donné que la distribution des délais d'attente dans les étages successifs du réseau de commutation est exactement la même qu'avec une méthode de reséquencement classique avec une gestion du type séquenceur ou file d'attente FIFO dans les SE respectivement. Dans le module terminal de sortie, le délai de reséquencement nécessaire pour chaque cellule est généralement plus faible avec la nouvelle technique qu'avec la technique classique, mais le délai de transfert total, comprenant le délai de reséquencement, est réduit, et il n'est plus constant (il n'est plus égal à un délai de transfert total fixe prédéterminé).

Cette dernière propriété implique donc que les positions temporelles des cellules "reséquencées" dans la mémoire tampon de sortie (séquenceur) ne soit plus homologues aux positions temporelles de ces cellules lors de leur arrivée au niveau des modules terminaux d'entrée (ces deux positions temporelles pour chaque cellule n'étant plus séparées par un délai de transfert total fixe).

Avec la nouvelle technique de reséquencement selon l'invention, l'arrivée des cellules dans la mémoire tampon du port de correspond à l'arrivée des cellules à l'entrée affectée d'une certaine fluctuation de délai (c'est-à-dire une variation de délai de transfert) reflétant les conflits d'accès entre les cellules dans les SE lors de leur acheminement vers leurs ports de sortie destinataires respectifs.

En effet, en l'absence de conflit d'accès, toutes les cellules pourraient être acheminées en séquence par l'intermédiaire d'étages SE successifs et aucun retard de reséquencement ne serait alors nécessaire au niveau de la sortie.

### 3.2.3 Applications

Si l'on considère le transfert simultané de cellules sensibles au temps réel (c'est-à-dire sensibles au délai de transfert et/ou à ses variations) et de cellules peu sensibles au temps réel (c'est-à-dire peu sensibles au délai de transfert et/ou à ses variations), ce dernier type (ayant une priorité de délai inférieure) pouvant connaître des délais de transferts variables plus importants à travers le commutateur, l'application directe de la technique proposée de reséquencement flottant au flux de cellules global (c'est-à-dire sans distinguer chaque type de flux de cellules pour effectuer le reséquencement ne permet pas d'obtenir des performances optimales, étant donné que la présence du flux de cellules peu sensibles au temps réel et présentant une distribution plus étendue des délais d'attente dans les SE, tend à retarder les seuils FRB (et par conséquent accroître le délai de reséquencement au niveau de la sortie pour l'ensemble des cellules). La fluctuation du délai de transfert qui en résulte pourrait donc être excessive pour le flux de cellules sensibles au temps réel.

Deux solutions sont alors possibles pour supprimer un tel impact sur le transfert des cellules sensibles au temps réel :
A - Soit appliquer de manière sélective deux techniques différentes de reséquencement dans les modules terminaux de sortie, à savoir: la méthode classique d'égalisation des délais pour le transfert des cellules sensibles au temps réel et la méthode de reséquencement flottant pour le transfert des cellules peu sensibles au temps réel. En fait, lorsqu'on utilise la même information temporelle , (TSTP), les deux méthodes de reséquencement peuvent être utilisées de manière compatible pour différents flux de cellules.
B - Soit appliquer la même technique de reséquencement flottant aux deux types transfert des cellules, mais gérée séparément pour chacun d'eux dans l'ensemble du commutateur et dans les modules terminaux de sortie.

Lorsqu'on utilise la solution A, le délai de transfert des cellules sensibles au temps réel non seulement n'est pas affecté par la présence de cellules peu sensibles au temps réel, mais en outre leur délai de transfert reste constant et égal à un délai de transfert total fixe prédéterminé (c'est-à-dire qu'aucune variation du délai de transfert des cellules sensibles au temps réel n'est introduite à travers le commutateur).

Dans ce cas, la gestion des FRB dans les SE peut se faire soit sur le flux global des cellules (sans distinguer les deux flux de cellules), soit plutôt de manière sélective uniquement sur les cellules peu sensibles au temps réel (c'est-à-dire en ne tenant pas compte des cellules sensibles au temps réel dans la gestion des FRB).

Lorsqu'on utilise la solution B, deux gestions distinctes des FRB doivent être effectuées simultanément, mais séparément, dans les SE, une pour chaque type de flux de cellules. Dans ce cas, en conséquence,
- chaque SE gère deux paramètres LFRB par liaison d'entrée, deux paramètres SLFRB au niveau du SE, et (dans le cas de la mise en file d'attente FIFO uniquement) deux paramètres TSTPm par liaison de sortie ;
- une seule valeur de seuil FRB par cellule normale suffit si l'on suppose que cette dernière achemine également une information caractéristique indiquant s'il s'agit d'une cellule sensible ou peu sensible au temps réel;
- par contre, deux valeurs de seuil FRB doivent être prévues dans une cellule (ou tranche temporelle) vide, une pour chaque type de flux de cellules.

Par la suite, dans chaque module terminal de sortie, les deux types de cellules hors séquence (pour chaque type de flux de cellules), qui sont multiplexées dans le flux global de cellules reçu, sont séparées et remises en séquence de manière sélective sur la base de leurs valeurs **de seuil** FRB respectives.

## Revendications

1. Procédé de reséquencement de blocs de données, dans un système de commutation asynchrone de blocs de données, la position d'origine d'un bloc de données dans la séquence source étant appelée position séquentielle, le dit système étant susceptible de ne pas respecter l'ordre séquentiel original des blocs de données lors de leur transfert vers un port de sortie, comme dans le cas d'un système de commutation multi-trajet, et comprenant des modules terminaux entrants et sortants interconnectés par au moins un étage de commutation comprenant au moins deux éléments de commutation,
caractérisé en ce que, sur chacun des liens internes interconnectant les éléments de commutation entre eux, et sur chacun des liens internes interconnectant les éléments de commutation et les modules terminaux, chacun desdits blocs de données comporte une information de reséquencement (RPI; FRB), permettant de déterminer un seuil temporel de reséquencement tel que :
- la position séquentielle de tous les blocs de données qui seront transférés ultérieurement sur ledit lien n'est pas antérieure audit seuil temporel de reséquencement ;
- et tous les blocs de données transmis sur ledit lien jusqu'audit bloc de données et dont la position séquentielle respective est inférieure ou égale à la valeur dudit seuil temporel de reséquencement, peuvent être remis en séquence.

2. Procédé de reséquencement selon la revendication 1, caractérisé en ce que chacun desdits blocs de données comporte également une information temporelle (TSTP) caractérisant la position séquentielle de ce bloc, ladite information temporelle étant caractérisée par la position de temps d'horloge à laquelle le bloc de données est transmis par le module terminal entrant, ladite position de temps d'horloge étant fournie par une base de temps synchronisée pour tous les modules terminaux entrants.

3. Procédé de reséquencement selon les revendications 1 et 2, caractérisé en ce que ladite information de reséquencement est un indicateur de bloc de données de reséquencement (RPI), associé à chacun desdits blocs de données, certains desdits blocs de données étant des blocs de reséquencement et un bloc de reséquencement indiquant, pour chacun des liens internes du système de commutation :
- que le seuil temporel de reséquencement sur ce lien correspond implicitement à la valeur de l'information temporelle (TSTP) de ce bloc données de reséquencement,
- que la valeur de l'information temporelle (TSTP) de tous les blocs de données qui seront transférés ultérieurement sur ce lien ne sera pas antérieure à la valeur de l'information temporelle (TSTP) de ce bloc de données de reséquencement,
- et que tous les blocs de données, transmis jusqu'à ce bloc peuvent être remis en séquence ;
en ce que chacun des modules terminaux entrants effectue un marquage de chacun des blocs de données sortants, en affectant systématiquement une information de reséquencement (RPI) audit bloc de données, précisant que ledit bloc de données sortant est toujours un bloc de données de reséquencement ;
en ce que chacun des éléments de commutation met en oeuvre, sur chacun de ses liens sortants, un marquage de chacun des blocs de données sortants, en affectant une information de reséquencement (RPI) audit bloc de données, précisant si ledit bloc de données est ou n'est pas un bloc de données de reséquencement ;
et en ce que chaque module terminal sortant observe ladite information de reséquencement marquée dans chaque bloc de données reçu sur ses liens entrants, et effectue, chaque fois que cette information de reséquencement (RPI) indique qu'il s'agit d'un bloc de données de reséquencement, la remise en séquence de l'ensemble des blocs de données qu'il a reçus, sur la base des informations temporelles (TSTP) respectives de ces blocs de données.

4. Procédé de reséquencement selon la revendication 3, caractérisé en ce que les blocs de données vides sont également marqués par un indicateur de bloc de données de reséquencement (RPI).

5. Procédé de reséquencement selon la revendication 4, caractérisé en ce que chacun desdits éléments de commutation comprend une mémoire tampon gérée par des moyens d'ordonnancement sélectionnant les blocs de données mémorisés en fonction de leurs informations temporelles (TSTP) respectives,
et en ce qu'il comprend, pour un bloc de données courant, les étapes de:
- mémorisation, pour chaque lien entrant dudit élément de commutation, de la dernière information temporelle de reséquencement (LFRP) pour ce lien entrant, ladite dernière information temporelle de reséquencement étant l'information temporelle (TSTP) contenue dans le dernier bloc de données dont l'information de reséquencement indique qu'il s'agit d'un bloc de reséquencement ;
- détermination continue d'un seuil correspondant à la plus petite valeur de dernière information temporelle de reséquencement (SLFRP), parmi l'ensemble desdites dernières informations temporelles de reséquencement (LFRP) relatives à tous les liens entrants ;
- et marquage de l'information de reséquencement dudit bloc courant sur chacun des liens sortants :
- en tant que bloc de données de reséquencement lorsque son information temporelle (TSTPt) est inférieure ou égale audit seuil (SLFRP);
- en tant que bloc de données qui n'est pas de reséquencement lorsque son information temporelle (TSTPt) est supérieure audit seuil (SLFRP).

6. Procédé de reséquencement selon la revendication 4, caractérisé en ce que chacun desdits éléments de commutation comprend une gestion de mémoire tampon de type file d'attente FIFO par destination de sortie, et en ce qu'il comprend, pour un bloc de données courant, une étape de marquage en entrée lors de l'écriture du bloc de données dans une file d'attente FIFO, et une étape de marquage en sortie lors de la lecture du bloc de données dans une file d'attente FIFO.

7. Procédé de reséquencement selon la revendication 6, caractérisé en ce que ladite étape de marquage en entrée dans les éléments de commutation comprend les étapes de :
- mémorisation, pour chaque lien entrant dudit élément de commutation, de la dernière information temporelle de reséquencement (LFRP) pour ce lien entrant, ladite dernière information temporelle de reséquencement étant l'information temporelle (TSTP) contenue dans le dernier bloc de données dont l'information de reséquencement indique qu'il s'agit d'un bloc de reséquencement ;
- détermination continue d'un seuil correspondant à la plus petite valeur de dernière information temporelle de reséquencement (SLFRP), parmi l'ensemble desdites dernières informations temporelles de reséquencement (LFRP) relatives à tous les liens entrants ;
- mémorisation, pour chaque lien sortant dudit élément de commutation, de la plus grande valeur d'information temporelle (HRCT) parmi les informations temporelles (TSTP) associées à tous les blocs de données mémorisés dans la file d'attente FIFO ;
- et marquage dudit bloc du bloc de données courant lors de son écriture dans la file d'attente par un indicateur de bloc de reséquencement détecté (RPD), si son information temporelle (TSTPr) est à la fois:
- égale audit seuil (SLFRP)
- et supérieure ou égale à de la plus grande valeur d'information temporelle (HRCT).

8. Procédé de reséquencement selon l'une quelconque des revendications 6 et 7, caractérisé en ce que ladite étape de marquage en sortie dans les éléments de commutation comprend l'étape de :
- marquage de l'information de reséquencement dudit bloc courant sur chacun des liens sortants:
- en tant que bloc de données de reséquencement :
- lorsque son indicateur de bloc de reséquencement détecté (RPD) associé indique qu'il est un bloc de données de reséquencement,
- ou bien lorsque ce bloc de données est le dernier bloc mémorisé dans la file d'attente FIFO pour la destination de sortie considérée et que son information temporelle (TSTPt) est inférieure ou égale audit seuil (SLFRP),
- en tant que bloc de données qui n'est pas de reséquencement dans les autres cas.

9. Procédé de reséquencement selon l'une quelconque des revendications 4 à 8, caractérisé en ce qu'un bloc de données vide sortant est marqué:
- dans chacun des modules terminaux entrants, systématiquement en tant que bloc de données de reséquencement, et avec une information temporelle (TSTP) égale à la position temporelle d'horloge à laquelle il est transmis ;
- dans chacun des éléments de commutation, sur chacun de ses liens sortants, en tant que bloc de données de reséquencement seulement lorsque la valeur dudit seuil (SLFRP) est supérieure ou égale à la valeur de l'information temporelle du dernier bloc de données non vide transmis (LSCT), et dans ce cas avec une information temporelle (TSTP) égale audit seuil (SLFRP).

10. Procédé de reséquencement selon les revendications 1 et 2, caractérisé en ce que ladite information de reséquencement est un seuil flottant de reséquencement (FRB) explicite, associé à chacun desdits blocs de données, tel que, pour chaque lien interne du système de commutation, ledit seuil flottant (FRB) d'un bloc de données:
- est inférieur ou égal à la valeur de l'information temporelle (TSTP) de ce bloc,
- est supérieur ou égal au seuil flottant (FRB) du bloc de données précédent transmis sur ce lien,
- et indique que tous les blocs de données, transmis jusqu'à ce bloc et dont la valeur de leur information temporelle (TSTP) respective est inférieure ou égale au seuil flottant (FRB) de ce bloc, peuvent être remis en séquence ;
en ce que chacun des modules terminaux entrants effectue un marquage de chacun des blocs de données sortants, en lui affectant systématiquement un seuil flottant (FRB) comme information de reséquencement toujours égal à la valeur de son information temporelle (TSTP) ;
en ce que chacun des éléments de commutation met en oeuvre, sur chacun de ses liens sortants, un marquage de chacun des blocs de données sortants, en lui affectant une information de reséquencement (FRB), précisant la valeur maximale des informations temporelles de blocs de données qui peuvent être remis en séquence ;
et en ce que chaque module terminal sortant observe ledit seuil flottant (FRB) comme information de reséquencement marqué dans chaque bloc de données reçu sur ses liens entrants, et effectue la remise en séquence des blocs de données reçus et dont l'information temporelle (TSTP) respective est inférieure ou égale au seuil flottant (FRB) du dernier bloc reçu, la remise en séquence étant effectuée sur la base de leurs informations temporelles (TSTP) respectives.

11. Procédé de reséquencement selon la revendication 10, caractérisé en ce que ledit seuil flottant de reséquencement (FRB) est inséré dans l'en-tête de chacun desdits blocs de données.

12. Procédé de reséquencement selon la revendication 10, caractérisé en ce que les blocs de données vides sont également marqués par un seuil flottant de reséquencement (FRB).

13. Procédé de reséquencement selon les revendications 2, 10, 11 et 12, caractérisé en ce que chacun desdits éléments de commutation comprend une mémoire tampon gérée par des moyens d'ordonnancement sélectionnant les blocs de données mémorisés en fonction de leurs informations temporelles (TSTP) respectives,
et en ce qu'il comprend, pour un bloc de données courant, les étapes de :
- mémorisation, pour chaque lien entrant dudit élément de commutation, de la valeur du dernier seuil flottant fourni comme information de reséquencement par les blocs de données reçus (LFRB) sur ce lien entrant ;
- détermination continue d'un seuil correspondant à la plus petite valeur de dernier seuil flottant reçu (SLFRB), parmi l'ensemble desdits derniers seuils flottants fournis par les blocs de données reçus (LFRB) relatifs à tous les liens entrants ;
- et marquage du seuil flottant comme information de reséquencement dudit bloc courant sur chacun des liens sortants tel que la valeur du seuil flottant marqué dans le bloc de données sortant est égale à:
- la valeur de son information temporelle (TSTPt) lorsque celle-ci est inférieure ou égale audit seuil (SLFRB);
- la valeur dudit seuil (SLFRB) lorsque son information temporelle (TSTPt) est supérieure audit seuil (SLFRB).

14. Procédé de reséquencement selon les revendications 2, 10, 11 et 12, caractérisé en ce que chacun desdits éléments de commutation comprend une gestion de mémoire tampon de type file d'attente FIFO par destination de sortie, et en ce qu'il comprend, pour un bloc de données courant, les étapes de :
- mémorisation, pour chaque lien entrant dudit élément de commutation, de la valeur du dernier seuil flottant fourni comme information de reséquencement par les blocs de données reçus (LFRB) sur ce lien entrant ;
- détermination continue d'un seuil correspondant à la plus petite valeur de dernier seuil flottant reçu (SLFRB), parmi l'ensemble desdits derniers seuils flottants fournis par les blocs de données reçus (LFRB) relatifs à tous les liens entrants ;
- et marquage du seuil flottant comme information de reséquencement dudit bloc courant sur chacun des liens sortants tel que la valeur du seuil flottant marqué dans le bloc de données sortant est égale à :
- la valeur de la plus petite des valeurs d'information temporelle (TSTPm) des blocs de données stockés dans la file d'attente FIFO considérée lorsque celle-ci est supérieure audit seuil (SLFRB) ;
- la valeur dudit seuil (SLFRB) lorsque la plus petite des valeurs d'information temporelle (TSTPm) est inférieure ou égale audit seuil (SLFRB).

15. Procédé de reséquencement selon l'une quelconque des revendications 10 à 14, caractérisé en ce qu'un bloc de données vide sortant est marqué :
- dans chacun des modules terminaux entrants, avec un seuil flottant de reséquencement (FRB) systématiquement égal à la position temporelle d'horloge à laquelle il est transmis ;
- dans chacun des éléments de commutation, sur chacun de ses liens sortants, avec un seuil flottant de reséquencement (FRB) systématiquement égal audit seuil (SLFRP).

16. Procédé de reséquencement selon l'une quelconque des revendications 1 à 15, caractérisé en ce que, le système de commutation effectuant un reséquencement distinct des blocs de données d'un premier type qui sont sensibles au temps réel et celui des blocs de données d'un second type qui sont peu sensibles au temps réel, il est appliqué aux blocs de données du second type, les blocs de données du premier type étant remis en séquence au moyen d'une première méthode basée sur l'égalisation du délai de transfert au niveau du port de sortie.

17. Procédé de reséquencement selon la revendication 16, caractérisé en ce que lesdits premiers et second types de blocs de données sont remis en séquence à l'aide de la même information temporelle (TSTP).

18. Procédé de reséquencement selon l'une quelconque des revendications 1 à 17, caractérisé en ce que, pour effectuer le reséquencement distinct de blocs de données d'un premier type qui sont sensibles au temps réel et celui de blocs de données d'un second type qui sont peu sensibles au temps réel, le système de commutation utilise la même méthode de reséquencement flottant, mais gérée séparément pour chaque type de bloc de données, et en ce que chaque bloc de données comporte :
- une seule information temporelle (TSTP);
- un seul seuil flottant de reséquencement (FRB), avec un indicateur de type de bloc de données associé, dans les blocs de données non vides;
- et deux seuils flottants de reséquencement (FRB), chacun relatif à un type de bloc de données, dans les blocs de données vides.

19. Bloc de données, destiné à être transmis à travers un système de commutation asynchrone susceptible de ne pas respecter l'ordre séquentiel original des blocs de données lors de leur transfert vers un port de sortie, comme dans le cas d'un système de commutation multi-trajet,
caractérisé en ce qu'il comporte une information de reséquencement (RPI ; FRB). permettant de déterminer si la position séquentielle de tous les blocs de données transférés ultérieurement sur un lien entrant ou sortant d'un élément de commutation ne peut pas être antérieure à la position séquentielle du bloc de données considéré.

20. Elément de commutation d'un système de commutation asynchrone susceptible de ne pas respecter l'ordre séquentiel original des blocs de données lors de leur transfert vers un port de sortie, comme dans le cas d'un système de commutation multi-trajet,
caractérisé en ce qu'il comprend des moyens de reséquencement de blocs de données, effectuant le traitement d'une information de reséquencement (RPI ; FRB) associée à chacun desdits blocs de données, ledit traitement comprenant les opérations suivantes :
- sur chaque lien entrant, analyser, pour chaque bloc de données reçu, ladite information de reséquencement associée indiquant ou permettant de déterminer si la position séquentielle de tous les blocs de données reçus ultérieurement sur ce lien entrant ne peut pas être antérieure à la position séquentielle du bloc de données reçu;
- et, sur chaque lien sortant, générer, pour chaque bloc de données transmis, ladite information de reséquencement associée indiquant ou permettant de déterminer si la position séquentielle de tous les blocs de données transmis ultérieurement sur ce lien sortant ne peut pas être antérieure à la position séquentielle du bloc de données transmis.
